(19) Europäisches Patentamt
European Patent Office
Office européen des brevets

(11) **EP 3 464 436 B1**

(12) **EUROPÄISCHE PATENTSCHRIFT**

(45) Veröffentlichungstag und Bekanntmachung des Hinweises auf die Patenterteilung:
**15.02.2023 Patentblatt 2023/07**

(21) Anmeldenummer: **17722842.6**

(22) Anmeldetag: **17.05.2017**

(51) Internationale Patentklassifikation (IPC):
**C08J 9/36** *(1974.07)*    **B29C 44/56** *(1995.01)*
**B29C 44/30** *(1995.01)*    **B29C 44/02** *(1995.01)*
**C08L 75/00** *(1974.07)*    **B32B 5/18** *(1968.09)*
**B32B 5/24** *(1968.09)*    **B32B 7/08** *(1968.09)*

(52) Gemeinsame Patentklassifikation (CPC):
**B29C 44/30; B29C 44/5681; B32B 5/022;**
**B32B 5/18; B32B 5/24; B32B 5/245; B32B 15/046;**
**B32B 27/065; B32B 27/30; B32B 27/308;**
**B32B 27/34; B32B 27/36; B32B 27/38;**
**B32B 27/40; B32B 29/007;**    (Forts.)

(86) Internationale Anmeldenummer:
**PCT/EP2017/061868**

(87) Internationale Veröffentlichungsnummer:
**WO 2017/202667 (30.11.2017 Gazette 2017/48)**

(54) **FASERVERSTÄRKUNG VON REAKTIVSCHAUMSTOFFEN AUS EINEM DOPPELBANDSCHÄUM- ODER EINEM BLOCKSCHÄUMVERFAHREN**

FIBRE REINFORCEMENT OF REACTIVE FOAMS OBTAINED BY A DOUBLE BELT FOAMING OR A BLOCK FOAMING METHOD

RENFORCEMENT PAR FIBRES DE MOUSSES RÉACTIVES OBTENUES PAR UN PROCÉDÉ DE MOUSSAGE À DOUBLE BANDE OU EN BLOC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2016 EP 16171418**

(43) Veröffentlichungstag der Anmeldung:
**10.04.2019 Patentblatt 2019/15**

(60) Teilanmeldung:
**22200379.0**

(73) Patentinhaber: **BASF SE**
**67056 Ludwigshafen (DE)**

(72) Erfinder:
- **RUCKDÄSCHEL, Holger**
  **67056 Ludwigshafen (DE)**
- **TERRENOIRE, Alexandre**
  **68623 Lampertheim (DE)**
- **ARBTER, Rene**
  **67056 Ludwigshafen (DE)**
- **SAMPATH, Bangaru Dharmapuri Sriramulu**
  **67056 Ludwigshafen (DE)**
- **GUTMANN, Peter**
  **67056 Ludwigshafen (DE)**
- **STOLL, Ragnar**
  **49448 Lemförde (DE)**
- **STEIN, Robert**
  **67056 Ludwigshafen (DE)**
- **HEBETTE, Christophe**
  **210048 Nanjing (CN)**

(74) Vertreter: **BASF IP Association**
**BASF SE**
**GBI-C006**
**67056 Ludwigshafen (DE)**

(56) Entgegenhaltungen:
WO-A1-2006/125561    US-A- 3 030 256
US-A- 3 951 718    US-A1- 2010 196 652
US-B1- 6 187 411

(52) Gemeinsame Patentklassifikation (CPC): (Forts.)
**C08G 18/18; C08G 18/1816; C08G 18/4211;**
**C08G 18/425; C08G 18/4829; C08G 18/6674;**
**C08G 18/7664; C08G 18/7671; C08J 9/36;**
B29C 44/352; B29C 44/5663; B29C 44/569;
B29K 2105/12; B29K 2105/14; B29K 2705/00;
B29L 2031/08; B29L 2031/30; B32B 2250/40;
B32B 2260/023; B32B 2260/046; B32B 2262/02;
B32B 2262/0238; B32B 2262/0253;
B32B 2262/0261; B32B 2262/0269;
B32B 2262/0276; B32B 2262/0292;
B32B 2262/065; B32B 2262/10; B32B 2262/101;

B32B 2262/103; B32B 2262/105; B32B 2262/106;
B32B 2266/0214; B32B 2266/0278;
B32B 2266/0285; B32B 2307/732; B32B 2603/00;
B32B 2605/08; B32B 2605/10; B32B 2605/18;
C08G 2101/00; C08G 2110/0025; C08G 2110/0083;
C08J 2201/022; C08J 2205/052; C08J 2205/10;
C08J 2300/24; C08J 2375/02; C08J 2375/04;
F05B 2280/6003; F05B 2280/6012

**Beschreibung**

Die vorliegende Erfindung betrifft einen Formkörper aus Reaktivschaumstoff, wobei sich mindestens eine Faser (F) teilweise innerhalb des Formkörpers befindet, also vom Reaktivschaumstoff umschlossen ist. Die beiden nicht vom Reaktivschaumstoff umschlossenen Enden der jeweiligen Faser (F) ragen somit aus jeweils einer Seite des entsprechenden Formkörpers heraus. Der Reaktivschaumstoff wird durch ein Doppelbandschäumverfahren oder ein Blockschäumverfahren hergestellt. Ein weiterer Gegenstand der vorliegenden Erfindung ist ein Paneel, das mindestens einen solchen Formkörper sowie mindestens eine weitere Schicht (S1) umfasst. Weitere Gegenstände der vorliegenden Erfindung sind Verfahren zur Herstellung der erfindungsgemäßen Formkörper aus Reaktivschaumstoff bzw. der erfindungsgemäßen Paneele sowie deren Verwendung, beispielsweise als Rotorblatt in Windenergieanlagen.

WO 2006/125561 betrifft ein Verfahren zur Herstellung von einem verstärkten zellulären Material, wobei in einem ersten Verfahrensschritt im zellulären Material mindestens ein Loch erzeugt wird, das sich von einer ersten Oberfläche zu einer zweiten Oberfläche des zellulären Materials erstreckt. Auf der anderen Seite, der zweiten Oberfläche des zellulären Materials, wird mindestens ein Faserbündel bereitgestellt, wobei dieses Faserbündel mit einer Nadel durch das Loch auf die erste Seite des zellulären Materials gezogen wird. Bevor die Nadel das Faserbündel fasst, wird die Nadel jedoch zunächst von der ersten Seite des zellulären Materials kommend durch das jeweilige Loch gezogen. Weiterhin befindet sich das Faserbündel mit Abschluss des Verfahrens gemäß WO 2006/125561 teilweise innerhalb des zellulären Materials, da es das entsprechende Loch ausfüllt, teilweise ragt das entsprechende Faserbündel auf den jeweiligen Seiten aus der ersten sowie zweiten Oberfläche des zellulären Materials heraus.

Durch das in WO 2006/125561 beschriebene Verfahren können sandwichartige Komponenten hergestellt werden, die einen Kern aus besagtem zellulären Material sowie mindestens ein Faserbündel umfassen. An den Oberflächen dieses Kernes können Harzschichten und faserverstärkte Harzschichten aufgebracht werden, um die eigentliche sandwichartige Komponente herzustellen. Als zelluläres Material zur Ausbildung des Kerns der sandwichartigen Komponente können beispielsweise Polyvinylchloride oder Polyurethane eingesetzt werden. Als Faserbündel kommen beispielsweise Kohlenstofffasern, Nylonfasern, Glasfasern oder Polyesterfasern in Frage.

WO 2006/125561 offenbart jedoch nicht, dass Reaktivschaumstoffe, die durch ein Doppelbandschäumverfahren oder ein Blockschäumverfahren hergestellt werden, als zelluläres Material zur Herstellung eines Kerns in einer sandwichartigen Komponente verwendet werden können. Die sandwichartigen Komponenten gemäß WO 2006/125561 eignen sich zur Verwendung im Flugzeugbau.

WO 2011/012587 betrifft ein weiteres Verfahren zur Herstellung eines Kerns mit integrierten Brückenfasern für Paneele aus Kompositmaterialien. Der Kern wird hergestellt, indem durch einen so genannten "Kuchen" aus Leichtmaterial die auf einer Oberfläche des entsprechenden Kuchens bereitgestellten Brückenfasern mit Hilfe einer Nadel teilweise oder vollständig durchgezogen werden. Der "Kuchen" kann aus Polyurethanschäumen, Polyesterschäumen, Polyethylenterephthalatschäumen, Polyvinylchloridschäumen oder einem phenolischen Schaum, insbesondere aus einem Polyurethanschaum ausgebildet sein. Als Fasern können prinzipiell jegliche Art von einfachen oder mehrfachen Fäden sowie sonstige Garne verwendet werden.

Die so hergestellten Kerne können wiederum Bestandteil eines Paneels aus Kompositmaterialien sein, wobei der Kern einseitig oder zweiseitig von einer Harzmatrix und Kombinationen aus Harzmatrizes mit Fasern in einer sandwichartigen Ausgestaltung umgeben ist. WO 2011/012587 offenbart jedoch nicht, dass Reaktivschaumstoffe, die durch ein Doppelbandschäumverfahren oder ein Blockschäumverfahren hergestellt werden, zur Herstellung des entsprechenden Kernmaterials eingesetzt werden können.

WO 2012/138445 betrifft ein Verfahren zur Herstellung eines Komposit-Kernpaneels unter Verwendung einer Vielzahl von länglichen Streifen aus einem zellulären Material mit einer niedrigen Dichte. Zwischen die jeweiligen Streifen wird eine doppellagige Fasermatte eingebracht, die unter Verwendung von Harz ein Verkleben der einzelnen Streifen unter Ausbildung der Komposit-Kernpaneele bewirkt. Das zelluläre Material mit niedriger Dichte, das die länglichen Streifen ausbildet, ist gemäß WO 2012/138445 ausgewählt aus Balsaholz, elastischen Schäumen oder faserverstärkten Kompositschäumen. Bei den doppellagig zwischen den einzelnen Streifen eingebrachten Fasermatten kann es sich beispielsweise um eine poröse Glasfasermatte handeln. Das als Kleber verwendete Harz kann beispielsweise ein Polyester, ein Epoxy- oder ein phenolisches Harz sein oder ein durch Wärme aktivierter Thermoplast, beispielsweise Polypropylen oder PET. WO 2012/138445 offenbart jedoch nicht, dass als zelluläres Material für die verlängerten Streifen auch ein Reaktivschaumstoff, der durch ein Doppelbandschäumverfahren oder ein Blockschäumverfahren hergestellt wird, verwendet werden kann. Ebenso wenig ist darin offenbart, dass einzelne Fasern oder Faserbündel in das zelluläre Material zur Verstärkung eingebracht werden können. Gemäß WO 2012/138445 werden hierfür ausschließlich Fasermatten eingesetzt, die zudem ein Verbindungsglied im Rahmen einer Verklebung der einzelnen Streifen mittels Harz unter Erhalt des Kernmaterials darstellen.

GB-A 2 455 044 offenbart ein Verfahren zur Herstellung eines mehrschichtigen Kompositartikels, wobei in einem ersten Verfahrensschritt eine Vielzahl von Pellets aus thermoplastischem Material sowie einem Treibmittel bereitgestellt werden. Das thermoplastische Material ist ein Gemisch aus Polystyrol (PS) und Polyphenylenoxid (PPO), das mindestens 20 bis 70 Gew.-% PPO enthält. In einem zweiten Verfahrensschritt werden die Pellets expandiert und in einem dritten Schritt in einer Form unter Ausbildung eines geschlossenzelligen Schaums aus dem thermoplastischen Material zu einem Formkörper verschweißt, wobei der geschlossenzellige Schaum die Gestalt der Form annimmt. Im nächsten Verfahrensschritt wird auf die Oberfläche des geschlossenzelligen Schaums eine Schicht aus faserverstärktem Material aufgebracht, wobei die Anbindung der jeweiligen Oberflächen unter Verwendung von einem Epoxidharz durchgeführt wird. GB-A 2 455 044 offenbart jedoch nicht, dass ein Fasermaterial in den Kern des mehrschichtigen Kompositartikels eingebracht werden kann.

Ein sinngemäßes Verfahren bzw. ein sinngemäßer mehrschichtiger Kompositartikel (wie in GB-A 2 455 044) ist auch in WO 2009/047483 offenbart. Diese mehrschichtigen Kompositartikel eignen sich beispielsweise zur Verwendung von Rotorblättern (in Windturbinen) oder als Bootrumpf.

US-B 7,201,625 offenbart ein Verfahren zur Herstellung von Schaumprodukten sowie die Schaumprodukte als solche, die beispielsweise im Sportbereich als Surfbrett eingesetzt werden können. Den Kern des Schaumproduktes bildet ein Partikelschaum, beispielsweise auf Basis eines Polystyrolschaums. Dieser Partikelschaum wird in einer speziellen Form hergestellt, wobei eine Plastikaußenhaut den Partikelschaum umschließt. Die Plastikaußenhaut kann beispielsweise ein Polyethylenfilm sein. Auch US-B 7,201,625 offenbart jedoch nicht, dass im Partikelschaum Fasern zur Verstärkung des Materials enthalten sein können.

US-B 6,767,623 offenbart Sandwichpaneele, die eine Kernschicht aus Polypropylenpartikelschaum auf der Basis von Partikeln mit einer Partikelgröße im Bereich von 2 bis 8 mm und einer Schüttdichte im Bereich von 10 bis 100 g/l aufweisen. Weiterhin umfassen die Sandwichpaneele zwei Deckschichten aus faserverstärktem Polypropylen, wobei die einzelnen Deckschichten so um den Kern angeordnet sind, dass ein Sandwich ausgebildet wird. Gegebenenfalls können noch weitere Schichten zu dekorativen Zwecken in den Sandwichpaneelen enthalten sein. Die Deckschichten können Glasfasern oder sonstige Polymerfasern enthalten.

EP-A 2 420 531 offenbart Extrusionsschaumstoffe auf Basis eines Polymers wie Polystyrol, in denen mindestens ein mineralischer Füllstoff mit einer Partikelgröße von $\leq$ 10 $\mu$m und mindestens ein Keimbildner enthalten sind. Diese Extrusionsschaumstoffe zeichnen sich durch ihre verbesserte Steifigkeit aus. Weiterhin wird ein entsprechendes Extrusionsverfahren zur Herstellung solcher Extrusionsschaumstoffe auf Basis von Polystyrol beschrieben. Die Extrusionsschaumstoffe können geschlossenzellig sein. Die EP-A 2 480 531 beschreibt allerdings nicht, dass die Extrusionsschaumstoffe Fasern enthalten.

WO 2005/056653 betrifft Partikelschaumstoffformteile aus expandierbaren, Füllstoff enthaltenden Polymergranulaten. Die Partikelschaumstoffformteile sind erhältlich durch Verschweißen von vorgeschäumten Schaumpartikeln aus expandierbaren, Füllstoff enthaltenden, thermoplastischen Polymergranulaten, wobei der Partikelschaumstoff eine Dichte im Bereich von 8 bis 300 g/l aufweist. Bei den thermoplastischen Polymergranulaten handelt es sich insbesondere um ein Styrolpolymer. Als Füllstoff können pulverförmige anorganische Stoffe, Metall, Kreide, Aluminiumhydroxid, Kalziumcarbonat oder Tonerde oder kugel- oder faserförmige anorganische Stoffe wie Glaskugeln, Glasfasern oder Kohlefasern eingesetzt werden.

Die US 3,030,256 beschreibt laminierte Paneele sowie ein Verfahren zu deren Herstellung. Die Paneele umfassen ein Kernmaterial, in das Faserbündel eingebracht sind sowie Oberflächenmaterialien. Die Kernmaterialien sind geschäumter Plastik oder expandierter Plastik. Die Fasern befinden sich mit einem Faserbereich innerhalb des Schaumstoffs, ein erster Faserbereich ragt aus der ersten Seite des Formkörpers heraus, ein zweiter Faserbereich aus der zweiten Seite des Formkörpers.

Die US 6,187,411 betrifft verstärkte Sandwichpaneele, die ein Schaumstoffkernmaterial, das auf beiden Seiten eine Faserschicht aufweist und Fasern, die durch die äußeren Faserschichten und den Schaumstoff hindurch gestochen werden, umfasst. Als Schaumstoffkernmaterialen sind Polyurethane, Phenole und Isocyanate beschrieben. Ein Reaktivschaumstoff, hergestellt nach einem Doppelbandschäumverfahren oder einem Blockschäumverfahren ist nicht offenbart.

Die US 2010/0196652 betrifft quasi-isotrope Sandwichstrukturen, die ein Kernmaterial umfassen, das von Fasermatten umgeben ist, wobei Glasfaser-Rovings in die Fasermatten und das Kernmaterial gestochen sind. Als Schaumstoffe sind verschiedene Schaumstoffe wie beispielsweise Polyurethan, Polyisocyanurat, Phenole Polystyrol (PEI), Polyethylen, Polypropylen und ähnliche, beschrieben.

Nachteilig bei den in US 3,030,256, US 6,187,411 und US 2010/0196652 beschriebenen Kompositmaterialien ist, dass diese häufig schlechte mechanische Eigenschaften und/oder eine hohe Harzaufnahme aufweisen.

Für die Herstellung von Reaktivschäumen gibt es eine Vielzahl unterschiedlicher Herstellverfahren, Materialien und daraus resultierende Eigenschaften. Eine Übersicht ist beispielsweise in 'Polyurethane and related foams', K. Ashida, 2006, CRC, in Polyurethane Handbook, G. Oertel, 1994, 2nd edition, Hanser und in Szycher's Handbook of Polyurethanes, M. Szycher, 2012, 2nd edition, CRC, gegeben.

Die der vorliegenden Erfindung zugrunde liegende Aufgabe besteht in der Bereitstellung von neuen faserverstärkten Formkörpern bzw. Paneelen.

Gelöst wird diese Aufgabe erfindungsgemäß durch einen Formkörper aus Reaktivschaumstoff, dadurch gekennzeichnet, dass mindestens eine Faser (F) sich mit einem Faserbereich (FB2) innerhalb des Formkörpers befindet und von dem Reaktivschaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei der Reaktivschaumstoff nach einem Doppelbandschäumverfahren oder einem Blockschäumverfahren hergestellt ist, wobei der Reaktivschaumstoff Zellen umfasst, wobei mindestens 50 % der Zellen anisotrop sind, wobei zumindest eine der mechanischen Eigenschaften des Reaktivschaumstoffs anisotrop ist, wobei der Reaktivschaumstoff auf Basis eines Polyurethans, eines Polyharnstoffs oder eines Polyisocyanurats ist,

wobei mindestens 50 % der Zellen bezogen auf ihre größte Dimension (a-Richtung) in einem Winkel $\gamma$ von > 60° relativ zur Dickenrichtung (d) des Formkörpers ausgerichtet sind,

wobei die Faser (F) in einem Winkel $\alpha$ von 10 bis 70° relativ zur Dickenrichtung (d) des Formkörpers in den Reaktivschaumstoff eingebracht ist, und

wobei zwei oder mehr Fasern (F) in einem Winkel $\beta$ zueinander im Formkörper vorliegen und der Winkel $\beta$ im Bereich $\beta$ = 360°/n liegt, wobei n eine ganzzahlige Zahl ist.

Anders ausgedrückt ist der Reaktivschaumstoff erhältlich nach einem Doppelbandschäumverfahren oder einem Blockschäumverfahren.

Die erfindungsgemäßen Formkörper zeichnen sich in vorteilhafter Weise durch eine geringe Harzaufnahme bei gleichzeitig guter Grenzflächenanbindung aus, wobei die geringe Harzaufnahme insbesondere auf den Reaktivschaumstoff, hergestellt nach einem Doppelbandschäumverfahren oder einem Blockschäumverfahren, zurückzuführen ist. Dieser Effekt ist insbesondere dann von Bedeutung, wenn die erfindungsgemäßen Formkörper zu den erfindungsgemäßen Paneelen weiterverarbeitet werden.

Da bei dem Formkörper der Reaktivschaumstoff Zellen umfasst und diese zu mindestens 50 %, vorzugsweise zu mindestens 80 % und mehr bevorzugt zu mindestens 90 % anisotrop sind, sind auch die mechanischen Eigenschaften des Reaktivschaumstoffs und damit auch die des Formkörpers anisotrop, was für die Anwendung des erfindungsgemäßen Formkörpers, insbesondere für Rotorblätter in Windenergieanlagen, im Transportsektor, im Bausektor, im Automobilbau, im Schiffsbau, im Schienenfahrzeugbau, im Containerbau, in sanitären Anlagen und/oder in der Luft- und Raumfahrt, besonders vorteilhaft ist.

Die erfindungsgemäßen Formkörper haben aufgrund ihrer Anisotropie in zumindest einer Richtung eine besonders hohe Druckfestigkeit. Sie zeichnen sich darüber hinaus durch eine hohe Geschlossenzelligkeit und gute Vakuumstabilität aus.

Da in einer bevorzugten Ausführungsform die mindestens eine Faser (F) in einem Winkel $\varepsilon \le 60°$ relativ zu der größten Dimension der anisotropen Zellen in den Reaktivschaumstoff eingebracht wird, wird beim Einbringen der mindestens einen Faser (F) eine geringere Zahl an Zellen zerstört als bei den im Stand der Technik beschriebenen Schaumstoffen, was sich ebenfalls positiv auf die Harzaufnahme des Formkörpers bei Verarbeitung zu einem Paneel auswirkt.

Zudem ist aufgrund der Anisotropie der Zellen der Nähwiderstand im Verfahren zur Herstellung von Formkörpern geringer als bei Schaumstoffen, die im Stand der Technik beschrieben sind. Dies ermöglicht einen schnelleren Nähprozess, zudem verlängert sich die Haltbarkeit der Nadel. Dies macht das erfindungsgemäße Verfahren besonders wirtschaftlich.

Eine weitere Verbesserung der Anbindung bei gleichzeitig reduzierter Harzaufnahme wird erfindungsgemäß durch die Faserverstärkung der Reaktivschaumstoffe in den erfindungsgemäßen Formkörpern bzw. den daraus resultierenden Paneelen ermöglicht. Erfindungsgemäß können die Fasern (einzeln oder vorzugsweise als Faserbündel) in vorteilhafter Weise zunächst trocken und/oder durch mechanische Prozesse in den Reaktivschaumstoff eingebracht werden. Die Fasern bzw. Faserbündel werden an den jeweiligen Reaktivschaumstoffoberflächen nicht bündig, sondern mit Überstand abgelegt und ermöglichen damit eine verbesserte Anbindung bzw. eine direkte Verbindung mit den entsprechenden Decklagen im erfindungsgemäßen Paneel. Dies ist insbesondere dann der Fall, wenn als Decklage erfindungsgemäß mindestens eine weitere Schicht (S1) unter Ausbildung eines Paneels auf die erfindungsgemäßen Formkörper aufgebracht wird. Vorzugsweise werden zwei Schichten (S1), die gleich oder verschieden sein können, aufgebracht. Besonders bevorzugt werden zwei gleiche Schichten (S1), insbesondere zwei gleiche faserverstärkte Harzschichten, auf einander gegenüberliegenden Seiten des erfindungsgemäßen Formkörpers unter Ausbildung eines erfindungsgemäßen Paneels aufgebracht. Solche Paneele werden auch als "Sandwichmaterialien" bezeichnet, wobei der erfindungsgemäße Formkörper auch als "Kernmaterial" bezeichnet werden kann.

Die erfindungsgemäßen Paneele zeichnen sich somit durch eine geringe Harzaufnahme in Verbindung mit einer guten Schälfestigkeit sowie einer guten Schubsteifigkeit und einem hohen Schubmodul aus. Weiterhin sind hohe Festigkeits- und Steifigkeitseigenschaften gezielt durch die Wahl der Fasertypen, deren Anteil und Anordnung einstellbar. Der Effekt einer geringen Harzaufnahme ist deswegen von Bedeutung, weil beim Einsatz von solchen Paneelen (Sandwichmaterialien) häufig das Ziel besteht, dass die strukturellen Eigenschaften bei möglichst geringem Gewicht erhöht werden sollen. Beim Einsatz von beispielsweise faserverstärkten Decklagen trägt neben den eigentlichen Decklagen und dem Formkörper (Sandwichkern) die Harzaufnahme des Formkörpers (Kernmaterials) zum Gesamtgewicht bei. Durch die erfindungsgemäßen Formkörper bzw. die erfindungsgemäßen Paneele kann die Harzaufnahme jedoch verringert werden, wodurch Gewicht sowie Kosten eingespart werden können.

Da der Reaktivschaumstoff des Formkörpers Zellen umfasst, die zu mindestens 50 %, bevorzugt zu mindestens 80 %, mehr bevorzugt zu mindestens 90 % anisotrop sind, kann die Harzaufnahme der erfindungsgemäßen Formkörper sowie deren mechanischen Eigenschaften gezielt gesteuert werden, durch die Ausrichtung der Zellen relativ zur Dickenrichtung (d) des Formkörpers.

Sofern die Zellen in einem Winkel γ von 0° relativ zur Dickenrichtung (d) ausgerichtet sind, wird im Paneel eine leicht erhöhte Harzaufnahme erzielt. Allerdings ergeben sich gleichzeitig verbesserte mechanische Eigenschaften in Dickenrichtung (d). Sind die Zellen dagegen erfindungsgemäß in einem Winkel γ von 90° relativ zur Dickenrichtung (d) ausgerichtet, so wird eine geringere Harzaufnahme erzielt, die mechanischen Eigenschaften sind immer noch gut.

Weiterhin können bei oder nach der Fertigung weitere Schichten (S2) auf den Reaktivschaumstoff aufgebracht werden. Derartige Schichten verbessern den Gesamtzusammenhalt des Reaktivschaumstoffs bzw. des erfindungsgemäßen Formkörpers.

Zusätzliche Verbesserungen/Vorteile werden dadurch erzielt, dass die Fasern (F) nicht nur parallel zueinander in den Reaktivschaumstoff eingebracht werden, sondern erfindungsgemäß weitere Fasern (F) in einem Winkel β zueinander, der vorzugsweise im Bereich von > 0 bis 180° liegt. Dadurch wird zusätzlich eine gezielte Verbesserung der mechanischen Eigenschaften des erfindungsgemäßen Formkörpers in unterschiedlichen Richtungen erreicht.

Ebenso ist es von Vorteil, wenn in den erfindungsgemäßen Paneelen die Harz(deck)schicht durch Flüssiginjektionsverfahren oder Flüssiginfusionsverfahren aufgebracht wird, bei dem die Fasern während der Verarbeitung mit Harz getränkt und die mechanischen Eigenschaften verbessert werden können. Zudem können dadurch Kosten eingespart werden.

Nachfolgend wird die vorliegende Erfindung weiter präzisiert.

Erfindungsgemäß umfasst der Formkörper einen Reaktivschaumstoff und mindestens eine Faser (F).

Die im Formkörper enthaltene Faser (F) ist eine einzelne Faser oder ein Faserbündel, vorzugsweise ein Faserbündel. Als Faser (F) eignen sich alle dem Fachmann bekannten Materialien, die Fasern bilden können. Beispielsweise ist die Faser (F) eine organische, anorganische, metallische, keramische Faser oder eine Kombination daraus, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser; eine polymere Faser ist vorzugsweise eine Faser aus Polyester, Polyamid, Polyaramid, Polyethylen, Polyurethan, Polyvinylchlorid, Polyimid und/oder Polyamidimid; eine Naturfaser ist vorzugsweise eine Faser aus Sisal, Hanf, Flachs, Bambus, Kokos und/oder Jute.

Vorzugsweise werden Faserbündel eingesetzt. Die Faserbündel setzen sich aus mehreren einzelnen Fasern (Filamenten) zusammen. Die Anzahl der Einzelfasern pro Bündel beträgt mindestens 10, bevorzugt 100 bis 100 000, besonders bevorzugt 300 bis 10 000 bei Glasfasern und 1000 bis 50 000 bei Kohlenstofffasern, und insbesondere bevorzugt 500 bis 5 000 bei Glasfasern und 2000 bis 20 000 bei Kohlenstofffasern.

Erfindungsgemäß befindet sich die mindestens eine Faser (F) mit einem Faserbereich (FB2) innerhalb des Formkörpers und ist von dem Reaktivschaumstoff umschlossen, während ein Faserbereich (FB1) der Faser (F) aus einer ersten Seite des Formkörpers herausragt und ein Faserbereich (FB3) der Faser (F) aus einer zweiten Seite des Formkörpers herausragt.

Der Faserbereich (FB1), der Faserbereich (FB2) und der Faserbereich (FB3) können jeweils einen beliebigen Anteil der Gesamtlänge der Faser (F) ausmachen. In einer Ausführungsform machen der Faserbereich (FB1) und der Faserbereich (FB3) jeweils unabhängig voneinander 1 bis 45 %, vorzugsweise 2 bis 40 % und besonders bevorzugt 5 bis 30 %, und der Faserbereich (FB2) 10 bis 98 %, vorzugsweise 20 bis 96 %, besonders bevorzugt 40 bis 90 % der Gesamtlänge der Faser (F) aus.

Es ist außerdem bevorzugt, dass die erste Seite des Formkörpers, aus der der Faserbereich (FB1) der Faser (F) herausragt, der zweiten Seite des Formkörpers gegenüberliegt, aus der der Faserbereich (FB3) der Faser (F) herausragt.

Die Faser (F) ist erfindungsgemäß in einem Winkel α relativ zu Dickenrichtung (d) des Formkörpers bzw. zur Orthogonalen (der Oberfläche) der ersten Seite des Formkörpers in den Formkörper eingebracht. Der Winkel α weißt beliebige Werte von 10 bis 70 ° auf, bevorzugt von 30 bis 60 °, besonders bevorzugt von 30 bis 50°, noch mehr bevorzugt von 30 bis 45°, insbesondere von 45°, relativ zur Dickenrichtung (d) des Formkörpers.

In einer weiteren Ausführungsform werden zumindest zwei Fasern (F) in zwei unterschiedlichen Winkeln α, $α_1$ und $α_2$, eingebracht, wobei der Winkel $α_1$ vorzugsweise im Bereich von 0° bis 15° und der zweite Winkel $α_2$ vorzugsweise im Bereich von 30 bis 50° liegt, insbesondere bevorzugt liegt $α_1$ im Bereich von 0° bis 5° und $α_2$ im Bereich von 40 bis 50°.

Vorzugsweise enthält ein erfindungsgemäßer Formkörper eine Vielzahl von Fasern (F), vorzugsweise als Faserbündel, und/oder umfasst mehr als 10 Fasern (F) oder Faserbündel pro m², bevorzugt mehr als 1000 pro m², besonders bevorzugt 4000 bis 40 000 pro m². Vorzugsweise weisen sämtliche Fasern (F) im erfindungsgemäßen Formkörper den gleichen Winkel $\alpha$ oder zumindest einen annähernd gleichen Winkel (Abweichung von maximal $+/-\ 5°$, vorzugsweise $+/-\ 2°$, besonders bevorzugt $+/-\ 1°$) auf.

Sämtliche Fasern (F) könnten parallel zueinander im Formkörper vorliegen, wobei erfindungsgemäß aber zwei oder mehr Fasern (F) in einem Winkel $\beta$ zueinander in dem Formkörper vorliegen. Unter dem Winkel $\beta$ wird im Rahmen der vorliegenden Erfindung der Winkel zwischen der senkrechten Projektion einer ersten Faser (F1) auf die Oberfläche der ersten Seite des Formkörpers und der senkrechten Projektion einer zweiten Faser (F2) auf die Oberfläche des Formkörpers verstanden, wobei beide Fasern in den Formkörper eingebracht sind.

Der Winkel $\beta$ liegt erfindungsgemäß im Bereich $\beta = 360°/n$, wobei n eine ganzzahlige Zahl ist. Bevorzugt liegt n im Bereich von 2 bis 6, besonders bevorzugt im Bereich von 2 bis 4. Beispielsweise liegt der Winkel $\beta$ bei 90°, 120° oder 180°. In einer weiteren Ausführungsform liegt der Winkel $\beta$ im Bereich von 80 bis 100°, im Bereich von 110 bis 130° oder im Bereich von 170 bis 190°. In einer weiteren Ausführungsform werden mehr als zwei Fasern (F) in einem Winkel $\beta$ zueinander eingebracht, beispielsweise drei oder vier Fasern (F). Diese drei oder vier Fasern (F) können jeweils zu den beiden benachbarten Fasern zwei unterschiedliche Winkel $\beta$, $\beta$, und $\beta_2$, aufweisen. Bevorzugt weisen alle Fasern (F) zu den beiden benachbarten Fasern (F) die gleichen Winkel $\beta=\beta_1=\beta_2$ auf. Beispielsweise beträgt der Winkel $\beta$ 90°, dann beträgt der Winkel $\beta$, zwischen der ersten Faser (F1) und der zweiten Faser (F2) 90°, der Winkel $\beta_2$ zwischen der zweiten Faser (F2) und dritten Faser (F3) 90°, der Winkel $\beta_3$ zwischen der dritten und vierten Faser (F4) 90 ° und der Winkel $\beta_4$ zwischen der vierten Faser (F4) und der ersten Faser (F1) ebenfalls 90 °. Als Winkel $\beta$ zwischen der ersten Faser (F1) (Referenz) und der zweiten (F2), dritten (F3) und vierten Faser (F4) ergeben sich dann im Uhrzeigersinn 90°, 180° und 270°. Analoge Betrachtungen gelten für die anderen möglichen Winkel.

Die erste Faser (F1) weist dann eine erste Richtung auf, die zweite Faser (F2), die in einem Winkel $\beta$ zur ersten Faser (F1) angeordnet ist, weist eine zweite Richtung auf. Bevorzugt liegen in der ersten Richtung und der zweiten Richtung eine ähnliche Anzahl von Fasern. Unter "ähnlich" wird vorliegend verstanden, dass der Unterschied zwischen der Anzahl der Fasern in jeder Richtung relativ zu der anderen Richtung < 30 %, besonders bevorzugt < 10 % und insbesondere bevorzugt < 2 % ist.

Die Fasern oder Faserbündel können in irregulären oder regulären Mustern eingebracht werden. Bevorzugt ist das Einbringen von Fasern oder Faserbündeln in regulären Mustern. Unter "regulären Mustern" wird im Rahmen der vorliegenden Erfindung verstanden, dass sämtliche Fasern parallel zueinander ausgerichtet sind und dass mindestens eine Faser oder Faserbündel zu allen direkt benachbarten Fasern oder Faserbündeln den gleichen Abstand (a) aufweist. Insbesondere bevorzugt weisen alle Fasern oder Faserbündel zu allen direkt benachbarten Fasern oder Faserbündeln den gleichen Abstand auf.

In einer weiteren bevorzugten Ausführungsform werden die Fasern oder Faserbündel so eingebracht, dass sie, bezogen auf ein rechtwinkliges Koordinatensystem, bei dem die Dickenrichtung (d) der z-Richtung entspricht, entlang der x-Richtung jeweils zueinander den gleichen Abstand ($a_x$) haben und entlang der y-Richtung den gleichen Abstand ($a_y$). Insbesondere bevorzugt weisen sie in x-Richtung und in $\gamma$-Richtung den gleichen Abstand (a) auf, wobei $a=a_x=a_y$, ist.

Die Dickenrichtung (d) bezieht sich im Rahmen der vorliegenden Erfindung auf die Dicke des erfindungsgemäßen Formkörpers sowie auf die Dicke des darin enthaltenen Reaktivschaumstoffs, der bereits mit den Abmessungen vorliegt, mit denen er im Formkörper eingesetzt wird, also auf den Reaktivschaumstoff, der gegebenenfalls nach seiner Herstellung für den Einsatz im erfindungsgemäßen Formkörper konfektioniert wurde.

Erfindungsgemäß liegen zwei oder mehr Fasern (F) in einem Winkel $\beta$ zueinander vor, und weisen die ersten Fasern (F1), die parallel zueinander vorliegen, vorzugsweise ein reguläres Muster mit einem ersten Abstand ($a_1$) auf und die zweiten Fasern (F2), die parallel zueinander vorliegen und in einem Winkel $\beta$ zu den ersten Fasern (F1) liegen, vorzugsweise ein reguläres Muster mit einem zweiten Abstand ($a_2$). In einer bevorzugten Ausführungsform weisen die ersten Fasern (F1) und die zweiten Fasern (F2) jeweils ein reguläres Muster mit einem Abstand (a) auf. Dann gilt $a=a_1=a_2$.

Werden Fasern oder Faserbündel mit einem Winkel $\beta$ zueinander in den Extrusionsschaumstoff eingebracht, so ist es bevorzugt, dass die Fasern oder Faserbündel innerhalb jeder Richtung einem regulären Muster folgen.

In einer bevorzugten Ausführungsform des Formkörpers gemäß der vorliegenden Erfindung weist die Oberfläche von mindestens einer Seite des Formkörpers mindestens eine Vertiefung auf, vorzugsweise ist die Vertiefung ein Schlitz oder ein Loch.

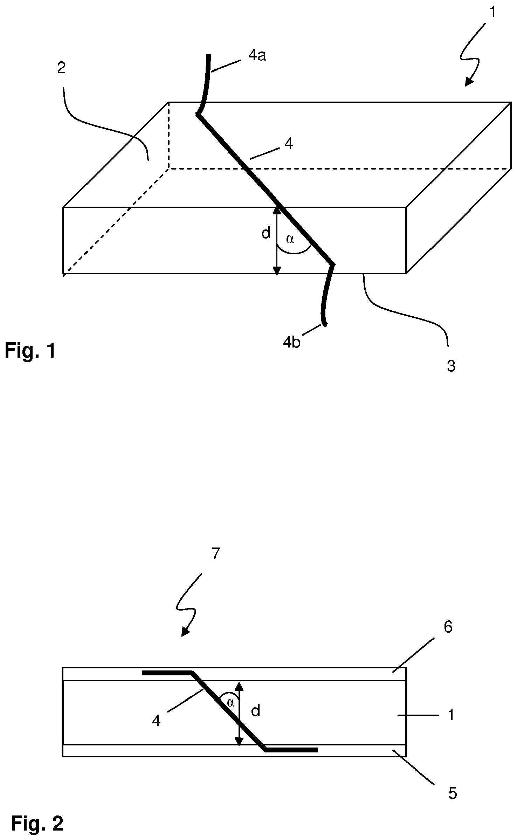

Figur 1 zeigt eine schematische Darstellung einer bevorzugten Ausführungsform des erfindungsgemäßen Formkörpers aus Reaktivschaumstoff (1) in einer perspektivischen Ansicht. (2) stellt dabei (die Oberfläche) einer ersten Seite des Formkörpers dar, während (3) eine zweite Seite des entsprechenden Formkörpers darstellt. Wie aus Figur 1 weiterhin ersichtlich, liegt die erste Seite (2) des Formkörpers gegenüber der zweiten Seite (3) dieses Formkörpers. Die Faser (F) ist durch (4) dargestellt. Ein Ende dieser Faser (4a) und somit der Faserbereich (FB1) ragt aus der ersten Seite (2) des Formkörpers heraus, während das andere Ende (4b) der Faser, das den Faserbereich (FB3) darstellt, aus der zweiten Seite (3) des Formkörpers herausragt. Der mittlere Faserbereich (FB2) befindet sich innerhalb des Formkörpers und ist somit von dem Reaktivschaumstoff umschlossen.

In Figur 1 befindet sich die Faser (4), die beispielsweise eine einzelne Faser oder ein Faserbündel, vorzugsweise ein Faserbündel, ist, in einem Winkel α relativ zur Dickenrichtung (d) des Formkörpers bzw. zur Orthogonalen (der Oberfläche) der ersten Seite (2) des Formkörpers in dem Formkörper. Der Winkel α weißt beliebige Werte von 10 bis 70 °, bevorzugt 30 bis 60 °, mehr bevorzugt 30 bis 50°, ganz besonders 30 bis 45°, insbesondere 45° auf. In Figur 1 ist der Übersichtlichkeit halber nur eine einzelne Faser (F) dargestellt.

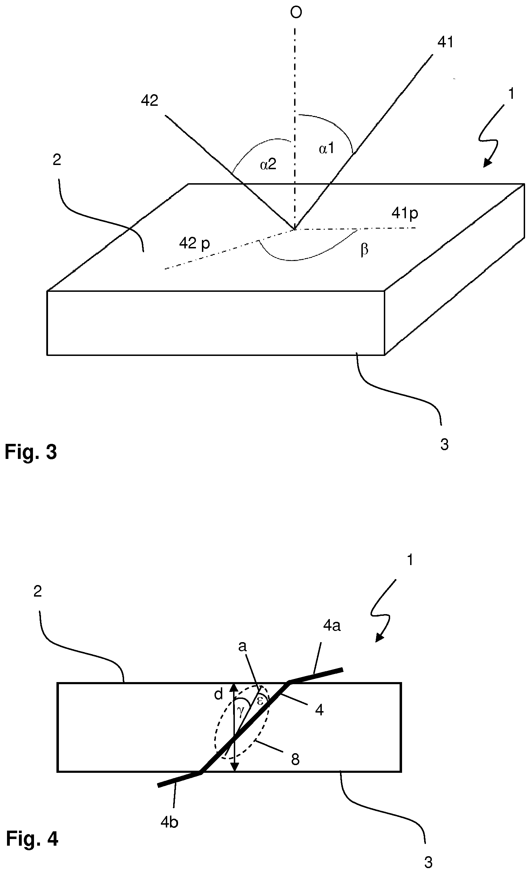

Figur 3 zeigt beispielhaft eine schematische Darstellung eines Teils der verschiedenen Winkel. Der in Figur 3 dargestellte Formkörper aus Reaktivschaumstoff (1) enthält eine erste Faser (41) und eine zweite Faser (42). In Figur 3 ist zur besseren Übersichtlichkeit lediglich der Faserbereich (FB1), der aus der ersten Seite (2) des Formkörpers herausragt, für die beiden Fasern (41) und (42) eingezeichnet. Die erste Faser (41) bildet relativ zur Orthogonalen (O) der Oberfläche der ersten Seite (2) des Formkörpers einen ersten Winkel α (α1). Die zweite Faser (42) bildet relativ zur Orthogonalen (O) der Oberfläche der ersten Seite (2) einen zweiten Winkel α (α2). Die senkrechte Projektion der ersten Faser (41) auf die erste Seite (2) des Formkörpers (41p) bildet mit der senkrechten Projektion der zweiten Faser (42) auf die erste Seite (2) des Formkörpers (42p) den Winkel β.

Der im Formkörper enthaltene Reaktivschaumstoff wird nach einem Doppelbandschäumverfahren oder einem Blockschäumverfahren hergestellt.

Doppelbandschäumverfahren sind dem Fachmann als solche ebenso bekannt wie Blockschäumverfahren.

Bei einem Doppelbandschäumverfahren und bei einem Blockschäumverfahren wird ein expandierter Schaumstoff von zumindest zwei Seiten kalibriert unter Erhalt des Reaktivschaumstoffs.

Vorzugsweise umfasst ein Doppelbandschäumverfahren die folgenden Schritte I-1) bis IV-1).

I-1) Bereitstellung einer reaktiven Mischung, die zumindest eine erste Komponente (K1) und zumindest eine zweite Komponente (K2) enthält, wobei die erste Komponente (K1) und die zweite Komponente (K2) miteinander reagieren können,

II-1) Einbringen der in Schritt I-1) bereitgestellten reaktiven Mischung zwischen ein unteres Trägermaterial und ein oberes Trägermaterial, wobei die reaktive Mischung auf dem unteren Trägermaterial aufliegt und wobei das obere Trägermaterial auf der reaktiven Mischung aufliegt,

III-1) Expansion der reaktiven Mischung zwischen dem unteren Trägermaterial und dem oberen Trägermaterial unter Erhalt eines expandierten Schaumstoffs und

IV-1) Kalibrieren des in Schritt III-1) erhaltenen expandierten Schaumstoffs zwischen zwei parallelen Bändern unter Erhalt des Reaktivschaumstoffs,

wobei die Schritte III-1) und IV-1) nacheinander oder gleichzeitig, vorzugsweise gleichzeitig, durchgeführt werden.

Als erste Komponente (K1) und zweite Komponente (K2), die in der in Schritt I-1) bereitgestellten reaktiven Mischung enthalten sind, eignen sich sämtliche erste Komponenten (K1) und zweite Komponenten (K2), die miteinander reagieren können. Derartige Komponenten sind dem Fachmann als solche bekannt, wobei erfindungsgemäß ein

Reaktivschaumstoff auf Basis eines Polyurethans, eines Polyharnstoffs oder eines Polyisocyanurats erhalten wird.

Als erste Komponente (K1) eignen sich beispielsweise Isocyanate. Isocyanate als solche sind dem Fachmann bekannt. Im Rahmen der vorliegenden Erfindung werden unter Isocyanaten alle aliphatischen, cycloaliphatischen und aromatischen Di- und/oder Polyisocyanate verstanden. Aromatische Di- und/oder Polyisocyanate sind bevorzugt. Besonders bevorzugt als erste Komponente (K1) sind Toluoldiisocyanat (TDI), Diphenylmethandiisocyanat (MDI), polymere Diphenylmethandiisocyanate (PMDI) und Mischungen daraus. Insbesondere bevorzugt sind Mischungen aus Diphenylmethandiisocyanat (MDI) und polymeren Diphenylmethandiisocyanaten (PMDI) als erste Komponente (K1).

Werden als erste Komponente (K1) Isocyanate eingesetzt, so können diese ganz oder teilweise mit Uretdion-, Carbamat-, Isocyanurat-, Carbodiimid-, Allophanat- und/oder Urethangruppen modifiziert sein. Bevorzugt sind sie mit Urethangruppen modifiziert. Derartige Isocyanate sind dem Fachmann als solche bekannt.

Als Isocyanate eignen sich zudem Präpolymere sowie Mischungen aus den oben beschriebenen Isocyanaten und Präpolymeren. Die Präpolymere werden aus den oben beschriebenen Isocyanaten sowie den weiter unten beschriebenen Polyethern, Polyestern oder Mischungen daraus, hergestellt.

Als erste Komponente (K1) geeignete Isocyanate weisen bevorzugt einen Isocyanatindex im Bereich von 100 bis 400, besonders bevorzugt im Bereich von 100 bis 300, insbesondere bevorzugt im Bereich von 100 bis 200, auf.

Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der reaktiven Mischung enthaltenen, gegenüber Isocyanat reaktiven Gruppen, einschließlich gegebenenfalls chemischer Treibmittel und Verbindungen mit Epoxidgruppen, verstanden, nicht aber die Isocyanatgruppe selbst.

Als zweite Komponente (K2) wird bevorzugt mindestens eine Verbindung mit gegenüber Isocyanaten reaktiven Gruppen, eingesetzt. Derartige Verbindungen sind dem Fachmann bekannt.

Als Verbindung mit gegenüber Isocyanaten reaktiven Gruppen können beispielsweise alle Verbindungen eingesetzt werden, die zumindest zwei gegenüber Isocyanaten reaktive Gruppen, wie OH-, SH-, NH- und/oder CH-azide Gruppen aufweisen.

Bevorzugt als zweite Komponente (K2) ist eine Verbindung mit gegenüber Isocyanaten reaktiven Gruppen, die ausgewählt ist aus der Gruppe bestehend aus Polyetherpolyolen, Polyesterpolyolen, und Polyaminen, wobei die mindestens eine Verbindung mit gegenüber Isocyanaten reaktiven Gruppen eine Funktionalität von 2 bis 8 aufweist und wobei, wenn die zweite Komponente (K2) ausgewählt ist aus Polyetherpolyolen und Polyesterpolyolen, die mindestens eine Verbindung mit gegenüber Isocyanaten reaktiven Gruppen eine mittlere Hydroxylzahl von 12 bis 1200 mg KOH/g aufweist.

Polyetherpolyole als solche sind dem Fachmann bekannt und können nach bekannten Verfahren hergestellt werden, beispielsweise durch anionische Polymerisation von Alkylenoxiden unter Zusatz mindestens eines Startermoleküls, das vorzugsweise 2 bis 6 reaktive Wasserstoffatome gebunden enthält, in Gegenwart von Katalysatoren. Als Katalysatoren können Alkalihydroxide wie beispielsweise Natrium- oder Kaliumhydroxid oder Alkalialkoholate wie Natriummethylat, Natrium- oder Kaliumethylat oder Kaliumisopropylat eingesetzt werden. Bei kationischer Polymerisation werden als Katalysatoren beispielsweise Lewis-Säuren wie Ammoniumpentachlorid, Bortrifluorid-Etherat oder Bleicherde eingesetzt. Weiter können als Katalysatoren auch Doppelmetallcyanidverbindungen, sogenannte DMC-Katalysatoren, sowie aminbasierte Katalysatoren eingesetzt werden.

Vorzugsweise werden als Alkylenoxide eine oder mehrere Verbindungen mit zwei bis vier Kohlenstoffatomen im Alkylenrest wie beispielsweise Ethylenoxid, Tetrahydrofuran, 1,2-Propylenoxid, 1,3-Propylenoxid, 1,2-Butylenoxid, 2,3-Butylenoxid sowie Mischungen daraus, eingesetzt. Bevorzugt werden Ethylenoxid und/oder 1,2-Propylenoxid eingesetzt.

Als Startermoleküle kommen beispielsweise Ethylenglycol, Diethylenglycol, Propylenglycol, Dipropylenglycol, Glyzerin, Trimethylolpropan, Pentaerythrit, Zuckerderivate wie Saccharose, Hexitderivate wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3-Propandiamin, 1,6-Hexandiamin, Ethanolamin, Diethanolamin, Triethanolamin sowie andere dem Fachmann bekannte zwei- oder mehrwertige Alkohole oder ein- oder mehrwertige Amine in Betracht.

Als Polyesterpolyole eignen sich alle dem Fachmann bekannten Polyesterpolyole. Beispielsweise können geeignete Polyesterpolyole durch Kondensation von mehrfunktionellen Alkoholen mit zwei bis zwölf Kohlenstoffen wie Ethylenglycol, Diethylenglycol, Butandiol, Trimethylolpropan, Glyzerin oder Pentaerythrit, mit mehrfunktionellen Carbonsäuren mit zwei bis zwölf Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren, den Anhydriden der genannten Säuren sowie Mischungen daraus, hergestellt werden. Bevorzugt werden aromatische Disäuren wie Phthalsäure, Isophthalsäure und/oder Terephthalsäure sowie deren Anhydride als Säurekomponente und Ethylenglycol, Diethylenglycol, 1,4-Butandiol und/oder Glyzerin als Alkoholkomponente eingesetzt.

Darüber hinaus können zur Herstellung der Polyesterpolyole anstatt der mehrfunktionellen Carbonsäuren auch entsprechende monomere Ester wie z.B. Dimethylterephthalat oder polymere Ester wie z.B. Polyethylenterephthalat, eingesetzt werden.

Als Polyamine eignen sich alle dem Fachmann bekannten Polyamine. Geeignete Polyamine sind sowohl aliphatische Polyamine als auch aromatische Polyamine. Bevorzugt sind aliphatische Polyamine, die im Rahmen der vorliegenden Erfindung auch als Polyalkylenpolyamine bezeichnet werden.

Unter dem Begriff "Polyalkylenpolyamin" werden im Rahmen der vorliegenden Erfindung aliphatische Amine verstanden, die mindestens drei Aminogruppen (primär, sekundär oder tertiär) enthalten.

Als Polyalkylenpolyamine sind Polyethylenimine besonders bevorzugt. Unter "Polyethyleniminen" werden im Rahmen der vorliegenden Erfindung sowohl oligomere als auch Homo- und Copolymere verstanden, welche die Gruppierungen -$CH_2$-$CH_2$-NH-aufweisen und mindestens drei Aminogruppen enthalten.

Die erste Komponente (K1) und die zweite Komponente (K2) können miteinander reagieren. Diese Reaktionen sind dem Fachmann als solche bekannt.

Bei der Reaktion der ersten Komponente (K1) mit der zweiten Komponente (K2) bilden sich erfindungsgemäß Polyurethane, Polyisocyanurate oder Polyharnstoffe, bevorzugt bilden sich Polyisocyanate oder Polyurethane, am meisten bevorzugt bilden sich Polyurethane. Dem Fachmann sind diese Reaktionen bekannt.

Beispielsweise bilden sich Polyurethane, wenn als erste Komponente (K1) Isocyanate eingesetzt werden und als zweite Komponente (K2) Polyetherpolyole. Polyisocyanurate bilden sich bei dem Einsatz von Isocyanaten als erste Komponente (K1) und Polyesterpolyolen als zweite Komponente (K2). Polyharnstoffe werden erhalten durch die Reaktion von Isocyanaten als erste Komponente (K1) und Polyaminen als zweite Komponente (K2).

Es versteht sich von selbst, dass Polyurethane auch beispielsweise Isocyanurateinheiten, Allophanateinheiten, Harnstoffeinheiten, Carbodiimideinheiten, Biureteinheiten, Uretonimineinheiten sowie gegebenenfalls weitere Einheiten, die sich bei Additionsreaktionen von Isocyanaten als erste Komponente (K1) bilden können, enthalten können. Entsprechend können Polyisocyanurate beispielsweise auch Urethaneinheiten, Allophanateinheiten, Harnstoffeinheiten, Carbodiimideinheiten, Biureteinheiten, Uretonimineinheiten sowie gegebenenfalls weitere Einheiten, die sich bei Additionsreaktionen von Isocyanaten als erste Komponente (K1) bilden können, enthalten. Ebenso können Polyharnstoffe beispielsweise auch Isocyanurateinheiten, Allophanateinheiten, Urethaneinheiten, Carbodiimideinheiten, Biureteinheiten, Uretonimineinheiten sowie gegebenenfalls weitere Einheiten, die sich bei Additionsreaktionen von Isocyanaten als erste Komponente (K1) bilden können, enthalten.

Die Bereitstellung der reaktiven Mischung in Schritt I-1) kann nach allen dem Fachmann bekannten Methoden erfolgen.

Zur Bereitstellung der reaktiven Mischung werden die erste Komponente (K1) und die zweite Komponente (K2) sowie gegebenenfalls in der reaktiven Mischung enthaltenen weiteren Komponenten und/oder Katalysatoren und/oder weitere Additive üblicherweise gemischt. Das Mischen erfolgt beispielsweise bei einer Temperatur im Bereich von 15 bis 130 °C, bevorzugt im Bereich von 15 bis 90 °C, insbesondere bevorzugt im Bereich von 25 bis 55 °C.

Das Mischen kann nach allen dem Fachmann bekannten Methoden erfolgen, beispielsweise mechanisch mittels eines Rührers oder einer Rührschnecke oder unter hohem Druck in einem Gegenstrominjektionsverfahren.

Die in Schritt I-1) bereitgestellte reaktive Mischung kann zudem noch weitere Komponenten enthalten. Weitere Komponenten sind beispielsweise physikalische und/oder chemische Treibmittel. Unter chemischen Treibmitteln versteht man Verbindungen, die bei Reaktion mit Isocyanat bei den verwendeten Reaktionstemperaturen gasförmige Produkte bilden wie beispielsweise Wasser oder Ameisensäure. Unter physikalischen Treibmitteln versteht man Verbindungen, die in den Komponenten des Doppelbandschäumverfahrens der Reaktivschaumherstellung gelöst oder emulgiert sind und unter den Bedingungen der Reaktion der reaktiven Mischung verdampfen. Dabei handelt es sich beispielsweise um Kohlenwasserstoffe, halogenierte Kohlenwasserstoffe und andere Verbindungen wie zum Beispiel perfluorierte Alkane wie Perfluorhexan, Fluorchlorkohlenwasserstoffe und Etheresterketone, Acetale sowie anorganische und organische Verbindungen, die beim Erhitzen Stickstoff freisetzen oder Mischungen daraus, beispielsweise (Cyclo)aliphatische Kohlenwasserstoffe mit vier bis acht Kohlenstoffatomen oder Fluorkohlenwasserstoffe wie 1,1,1,3,3-Pentafluorporopan (HFC 245 fa), Trifluormethan, Difluormethan, 1,1,1,3,3-Pentafluorbutan (HFC 365 mfc), 1,1,1,2-Tetrafluorethan, Difluorethan und Heptafluorpropan.

Vorteilhafterweise werden als Treibmittel niedrigsiedende aliphatische Kohlenwasserstoffe, vorzugsweise n-Pentan und/oder Iso-Pentan, insbesondere n-Pentan, oder cycloaliphatische Kohlenwasserstoffe, insbesondere Cyclopentan, verwendet.

Weiterhin bevorzugt enthält das Treibmittel Wasser, insbesondere bevorzugt besteht das Treibmittel aus Wasser.

Zudem kann die reaktive Mischung Katalysatoren enthalten. Als Katalysatoren können alle Verbindungen eingesetzt werden, die die Reaktion der ersten Komponente (K1) mit der zweiten Komponente (K2) beschleunigen. Solche Verbindungen sind bekannt und beispielsweise im "Kunststoffhandbuch Band 7, Polyurethan, Karl Hanser Verlag, 3. Auflage 1993, Kapitel 3.4.1" beschrieben.

Darüber hinaus kann die in Schritt I-1) bereitgestellte reaktive Mischung weitere Additive enthalten. Derartige Additive sind dem Fachmann als solche bekannt. Additive sind beispielsweise Stabilisatoren, grenzflächenaktive Substanzen, Flammschutzmittel oder Kettenverlängerer.

Stabilisatoren werden auch als Schaumstabilisatoren bezeichnet. Unter Stabilisatoren werden im Rahmen der vorliegenden Erfindung Stoffe verstanden, welche die Ausbildung einer regelmäßigen Zellstruktur bei der Schaumbildung fördern. Geeignete Stabilisatoren sind beispielsweise silikonhaltige Schaumstabilisatoren wie Siloxan-Oxalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Tolouidin, Bisphenol A, alkyliertem Bisphenol A, Polyvinylalkohol sowie weitere Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Tolouidin, Formaldehyd und Naphthol, Formaldehyd und Alkylnaphthol sowie Formaldehyd und Bisphenol A oder Mischungen aus zwei oder mehreren dieser Schaumstabilisatoren.

Grenzflächenaktive Substanzen werden auch als oberflächenaktive Substanzen bezeichnet. Unter grenzflächenaktiven Substanzen werden Verbindungen verstanden, welche zur Unterstützung der Homogenisierung der Ausgangsstoffe dienen und gegebenenfalls auch geeignet sind, die Zellstruktur der Kunststoffe zu regulieren. Dazu zählen beispielsweise Emulgatoren wie Natriumsalze von Rizinusölsulfaten oder von Fettsäuren sowie Salze von Fettsäuren mit Aminen, z.B. ölsaures Diethylamin, stearinsaures Diethanolamin, rizinolsaures Diethanolamin, Salze von Sulfonsäuren, z.B. Alkali- oder Ammoniumsalze von Dodecylbenzoldisulfonsäure, Dinaphtylmethandisulfonsäure und Rizinolsäure.

Als Flammschutzmittel können beispielsweise organische Phosphorsäure- und/oder Phosphonsäureester eingesetzt werden. Vorzugsweise werden gegenüber Isocyanatgruppen nicht-reaktive Verbindungen eingesetzt. Auch Chlor-enthaltende Phosphorsäureester gehören zu den bevorzugten Verbindungen. Geeignete Flammschutzmittel sind beispielsweise Tris-(2-chlorpropyl)phosphat, Triethylphosphat, Diphenylkresylphosphat, Diethylethanphosphinat, Trikresylphosphat, Tris-(2-chlorethyl)-phosphat, Tris-(1,3-dichlorpropyl)-phosphat, Tris-(2,3-dibrompropopyl)-phosphat, Tetrakis-(2-chlorethyl)-ethylendiphosphat, Dimethylmethanphosphonat, Diethanolaminomethylphosphonsäure-Diethylester sowie handelsübliche halogenierte Flammschutzpolyole.

Daneben können beispielsweise auch Brom-enthaltende Flammschutzmittel zum Einsatz kommen. Als Brom-enthaltende Flammschutzmittel werden vorzugsweise Verbindungen eingesetzt, die gegenüber der Isocyanatgruppe reaktiv sind. Derartige Verbindungen sind beispielsweise Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Außer den bereits genannten halogensubstituierten Phosphaten können beispielsweise auch anorganische oder organische Flammschutzmittel wie roter Phosphor, Aluminiumoxidhydrat, Antimontrioxid, Arsenoxid, Ammoniumpolyphosphat und Calciumsulfat, Blähgraphit oder Cyanursäurederivate wie z.B. Melamin oder Mischungen aus zwei Flammschutzmitteln wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-Polyadditionsprodukte verwendet werden.

Unter Kettenverlängerern werden bifunktionelle Verbindungen verstanden. Derartige Verbindungen sind dem Fachmann als solche bekannt. Geeignete Kettenverlängerer sind beispielsweise aliphatische, cycloaliphatische und/oder aromatische Diole mit zwei bis vierzehn, vorzugsweise zwei bis zehn Kohlenstoffatomen, wie Ethylenglycol, 1,2-Propandiol, 1,3-Propandiol, 1,2-Pentandiol, 1,3-Pentandiol, 1,10-Dekandiol, 1,2-Dihydroxycyclohexan, 1,3-Dihydroxycyclohexan, 1,4-Dihydroxycyclohexan, Diethylenglycol, Triethylenglycol, Dipropylenglycol, Tripropylenglycol, 1,4-Butandiol, 1,6-Hexandiol und Bis-(2-hydroxyethyl)-hydrochinon.

In Schritt II-1) wird die in Schritt I-1) bereitgestellte reaktive Mischung zwischen ein unteres und ein oberes Trägermaterial eingebracht. Das Einbringen in Schritt II-1) erfolgt üblicherweise kontinuierlich.

Im Rahmen der vorliegenden Erfindung wird das Einbringen der in Schritt I-1) bereitgestellten reaktiven Mischung zwischen das obere und das untere Trägermaterial auch als Injektion bezeichnet. Die Begriffe "Einbringen" und "Injektion" sowie "einbringen" und "injizieren" werden also im Rahmen der vorliegenden Erfindung synonym gebraucht und besitzen daher die gleiche Bedeutung.

Unter einem kontinuierlichen Einbringen wird im Rahmen der vorliegenden Erfindung verstanden, dass die reaktive Mischung gleichmäßig ohne Unterbrechungen zwischen das unter Trägermaterial und das obere Trägermaterial eingebracht wird.

Geeignete untere und obere Trägermaterialien sind dem Fachmann bekannt. Beispielsweise können Aluminiumfolie, Papier, Polymerfolien oder Vliese eingesetzt werden. Vorzugsweise ist das untere Trägermaterial und/oder das obere Trägermaterial eine Schicht (S2). Für das untere Trägermaterial und das obere Trägermaterial gelten daher die weiter unten beschriebenen Ausführungen und Bevorzugungen für die Schicht (S2) entsprechend.

Es ist außerdem bevorzugt, dass das untere Trägermaterial das gleiche Trägermaterial ist wie das obere Trägermaterial.

In Schritt III-1) wird die reaktive Mischung zwischen dem unteren Trägermaterial und dem oberen Trägermaterial expandiert unter Erhalt eines expandierten Schaumstoffs. Die Expansion der reaktiven Mischung erfolgt durch die Reaktion der ersten Komponente (K1) mit der zweiten Komponente (K2). Derartige Reaktionen sind dem Fachmann bekannt. Die Expansion kann gefördert werden durch das gegebenenfalls in der reaktiven Mischung enthaltene chemische und/oder physikalische Treibmittel.

Die Expansion der reaktiven Mischung kann beispielsweise initiiert werden durch den gegebenenfalls in der reaktiven Mischung enthaltenen Katalysator.

Die Temperatur während Schritt III-1) liegt üblicherweise im Bereich von 20 bis 250 °C, vorzugsweise im Bereich von 30 bis 180 °C, besonders bevorzugt im Bereich von 30 bis 110 °C und insbesondere im Bereich von 30 bis 80 °C.

Während der Expansion der reaktiven Mischung kann sich der sich bildende expandierte Schaumstoff mit dem unteren Trägermaterial und/oder dem oberen Trägermaterial verbinden. Die Verbindung des unteren Trägermaterials und/oder des oberen Trägermaterials mit dem sich bildenden expandierten Schaumstoff kann beispielsweise dadurch erfolgen, dass der expandierte Schaumstoff in Poren und/oder Lücken des unteren Trägermaterials und/oder des oberen Trägermaterials eindringt. Darüber hinaus ist es beispielsweise möglich, dass der sich bildende expandierte Schaumstoff mit dem unteren Trägermaterial und/oder dem oberen Trägermaterial eine physikalische, mechanische oder chemische Bindung eingeht. Dieses Eingehen einer Bindung ist dem Fachmann bekannt.

Unter einer chemischen Bindung wird im Rahmen der vorliegenden Erfindung verstanden, dass der sich bildende expandierte Schaumstoff eine chemische Verbindung mit dem unteren Trägermaterial und/oder mit dem oberen Trägermaterial eingeht.

Unter einer physikalischen Bindung wird im Rahmen der vorliegenden Erfindung verstanden, dass der sich bildende expandierte Schaumstoff und das untere Trägermaterial und/oder das obere Trägermaterial nur durch physikalische Wechselwirkungen miteinander verbunden sind, beispielsweise durch van der Waals-Wechselwirkungen.

Unter einer mechanischen Bindung wird im Rahmen der vorliegenden Erfindung verstanden, dass der sich bildende expandierte Schaumstoff mit dem unteren Trägermaterial und/oder dem oberen Trägermaterial mechanisch verbunden ist, beispielsweise durch Verhakungen.

Es versteht sich von selbst, dass auch Kombinationen der vorstehend beschriebenen Bindungen möglich sind.

In Schritt IV-1) wird der in Schritt III-1) erhaltene expandierte Schaumstoff zwischen zwei parallelen Bändern unter Erhalt des Reaktivschaumstoffs kalibriert.

Dieses Verfahren ist dem Fachmann als solches bekannt.

Die zwei parallelen Bänder sind vorzugsweise oberhalb und unterhalb des expandierten Schaumstoffs angeordnet, also oberhalb des oberen Trägermaterials und unterhalb des unteren Trägermaterials. Durch die Kalibrierung in Schritt IV-1) wird die geometrische Form des Querschnitts des erfindungsgemäßen Reaktivschaumstoffs in Richtung des unteren Trägermaterials und des oberen Trägermaterials also festgelegt.

Die beiden parallelen Bänder können beispielsweise temperiert, bevorzugt beheizt sein.

Die Schritte III-1) und IV-1) können nacheinander oder gleichzeitig durchgeführt werden. Bevorzugt werden sie gleichzeitig durchgeführt. Es ist also bevorzugt, dass die reaktive Mischung zwischen dem unteren Trägermaterial und dem oberen Trägermaterial expandiert wird, während der erhaltene expandierte Schaumstoff gleichzeitig zwischen zwei parallelen Bändern kalibriert wird.

Im Anschluss an Schritt IV-1) kann das untere Trägermaterial und/oder das obere Trägermaterial von dem Reaktivschaumstoff entfernt werden. Bevorzugt werden das untere Trägermaterial und/oder das obere Trägermaterial nicht von dem Reaktivschaumstoff entfernt. Bevorzugt umfasst der Reaktivschaumstoff, der durch ein Doppelbandschäumverfahren hergestellt ist, daher ein unteres Trägermaterial und/oder ein oberes Trägermaterial sowie den Reaktivschaumstoff.

Durch das Trägermaterial, das auf dem Reaktivschaumstoff aufgebracht ist, kann die Stabilität des Reaktivschaumstoffs bei der Einbringung der Fasern verbessert werden. Zudem kann die Aufbringung von Schichten, insbesondere beispielsweise der Schicht (S2), direkt in die Schaumherstellung integriert werden und durch die Reaktivität und geringe bis moderate Viskosität bei der Einbringung des Reaktivschaumstoffs die Anbindung an den Reaktivschaumstoff verbessert werden.

Ein Blockschäumverfahren ist dem Fachmann als solches ebenfalls bekannt. Vorzugsweise umfasst ein Blockschäumverfahren die folgenden Schritte I-2) bis III-2):

I-2) Bereitstellung einer reaktiven Mischung, die zumindest eine erste Komponente (K1) und zumindest eine zweite Komponente (K2) enthält, wobei die erste Komponente (K1) und die zweite Komponente (K2) miteinander reagieren können,

II-2) Einbringen der in Schritt I-2) bereitgestellten reaktiven Mischung in ein formgebendes Werkzeug, wobei das formgebende Werkzeug zumindest eine offene Seite und zumindest zwei geschlossene Seiten aufweist und

III-2) Expansion der reaktiven Mischung in dem formgebenden Werkzeug unter Erhalt des Reaktivschaumstoffs.

Für den Schritt I-2) des Blockschäumverfahrens gelten die zuvor beschriebenen Ausführungen und Bevorzugungen für den Schritt I-1) des Doppelbandschäumverfahrens entsprechend.

In Schritt II-2) wird die in Schritt I-2) bereitgestellte reaktive Mischung in ein formgebendes Werkzeug eingebracht. Das Einbringen der in Schritt I-2) bereitgestellten reaktiven Mischung in Schritt II-2) in ein formgebendes Werkzeug wird im Rahmen der vorliegenden Erfindung auch als Injektion bezeichnet. Die Begriffe "Einbringen" und "Injektion" sowie "einbringen" und "injizieren" werden im Rahmen der vorliegenden Erfindung daher synonym gebraucht und besitzen die gleiche Bedeutung. Erfindungsgemäß weist das formgebende Werkzeug zumindest eine offene Seite und zumindest zwei geschlossene Seiten auf. Derartige formgebende Werkzeuge sind dem Fachmann bekannt.

Vorzugsweise umfasst das formgebende Werkzeug eine Grundfläche und zwei oder mehrere Seitenwände. Die Seitenwände sind, ebenso wie die Grundfläche, geschlossene Seiten des formgebenden Werkzeugs. Dabei ist es insbesondere bevorzugt, dass die Seitenwände regelmäßige Anordnungen aufweisen, bevorzugt sind sie orthogonal zu der Grundfläche ausgerichtet. Die Grundfläche ist bevorzugt rechteckig. Nach oben, also gegenüber zur Grundfläche, ist das formgebende Werkzeug offen. Unter "offen" wird im Zusammenhang mit dem formgebenden Werkzeug verstanden, dass die reaktive Mischung in Schritt III-2) in dieser Richtung frei expandieren kann. Ist das formgebende Werkzeug nach oben hin offen, so kann auf der offenen Seite beispielsweise auch ein frei aufliegender Deckel angeordnet sein.

Durch diesen wird die freie Expansion der reaktiven Mischung nicht beschränkt; die reaktive Mischung kann in Schritt III-2) in dieser Richtung also frei expandieren.

Das formgebende Werkzeug kann Träger- und/oder Trennschichten umfassen. Die Träger- und/oder Trennschichten sind dem Fachmann bekannt. Die Träger- und/oder Trennschicht kann eine Schicht (S2) sein. Für die Träger- und/oder Trennschicht gelten die weiter unten beschriebenen Ausführungen und Bevorzugungen für die Schicht (S2) entsprechend.

Das Einbringen der in Schritt I-2) bereitgestellten reaktiven Mischung in das formgebende Werkzeug erfolgt in der Regel diskontinuierlich.

Unter einem diskontinuierlichen Einbringen wird verstanden, dass das Einbringen der reaktiven Mischung in das formgebende Werkzeug zeitweise unterbrochen wird. Dadurch werden im Blockschäumverfahren mehrere einzelne Blöcke des Reaktivschaumstoffs erhalten.

In Schritt III-2) wird die reaktive Mischung in dem formgebenden Werkzeug unter Erhalt des Reaktivschaumstoffs expandiert. Die Expansion der reaktiven Mischung erfolgt durch die Reaktion der ersten Komponente (K1) mit der zweiten Komponente (K2). Derartige Reaktionen sind dem Fachmann bekannt. Die Expansion kann gefördert werden durch das gegebenenfalls in der reaktiven Mischung enthaltene chemische und/oder physikalische Treibmittel.

Die Expansion der reaktiven Mischung kann beispielsweise initiiert werden durch den gegebenenfalls in der reaktiven Mischung enthaltenen Katalysator.

Die Temperatur des formgebenden Werkzeugs während Schritt III-2) liegt üblicherweise im Bereich von 20 bis 200 °C, vorzugsweise im Bereich von 30 bis 140 °C, besonders bevorzugt im Bereich von 30 bis 110 °C und insbesondere im Bereich von 30 bis 80 °C. Bevorzugt liegt die Temperatur des formgebenden Werkzeug während sämtlichen Schritten I-2) bis III-2) des Blockschäumverfahrens im Bereich von 20 bis 200 °C, bevorzugt im Bereich von 30 bis 140 °C, insbesondere bevorzugt im Bereich von 30 bis 80 °C.

Der in Schritt III-2) erhaltene Reaktivschaumstoff kann im Anschluss an Schritt III-2) beispielsweise konfektioniert werden, zum Beispiel durch Schneiden. Verfahren hierzu sind dem Fachmann bekannt.

Bezogen auf ein rechtwinkliges Koordinatensystem wird die Länge des gemäß dem Doppelbandschäumverfahrens oder des Blockschäumverfahrens erhaltenen Reaktivschaumstoffs als x-Richtung bezeichnet, die Breite als $\gamma$-Richtung und die Dicke als z-Richtung.

Der erfindungsgemäße Reaktivschaumstoff kann beliebige Größen aufweisen.

Üblicherweise weist der erfindungsgemäß hergestellte Reaktivschaumstoff eine Dicke (z-Richtung) im Bereich von mindestens 10 mm, mindestens 100 mm, eine Länge (x-Richtung) von mindestens 200 mm, vorzugsweise von mindestens 400 mm und eine Breite (y-Richtung) von mindestens 200 mm, vorzugsweise von mindestens 400 mm auf.

Der Reaktivschaumstoff weist üblicherweise eine Länge (x-Richtung) von maximal 4000 mm, bevorzugt von maximal 2500 mm und/oder eine Breite (y-Richtung) von maximal 4000 mm, bevorzugt von maximal 2500 mm auf.

Der Reaktivschaumstoff weist außerdem üblicherweise eine Dicke (z-Richtung) von maximal 4000 mm, bevorzugt von maximal 2500 mm auf.

Die vorstehend beschriebenen Abmessungen des Reaktivschaumstoffs, also die Dicke (z-Richtung), die Breite (y-Richtung) und die Länge (x-Richtung), beziehen sich auf die Abmessungen des durch ein Blockschäumverfahren oder ein Doppelbandschäumverfahren hergestellten Reaktivschaumstoffs, bevor er gegebenenfalls konfektioniert wurde durch beispielsweise Sägen oder Schneiden. Nach der Konfektionierung können sich die Abmessungen ändern und die Dickenrichtung (d) kann von der Dicke des Reaktivschaumstoffs direkt nach dessen Herstellung verschieden sein.

Der Reaktivschaumstoff ist erfindungsgemäß auf Basis eines Polyurethans, eines Polyharnstoffs oder eines Polyisocyanurats. Insbesondere bevorzugt ist der Reaktivschaumstoff auf Basis eines Polyurethans.

Ist der Reaktivschaumstoff auf Basis eines Polyurethans, eines Polyharnstoffs oder eines Polyisocyanurats, so bedeutet dies im Rahmen der vorliegenden Erfindung, dass der Reaktivschaumstoff neben dem Polyurethan, dem Polyharnstoff oder dem Polyisocyanurat weitere Polymere enthalten kann, beispielsweise als Blend aus dem Polyurethan, dem Polyharnstoff oder dem Polyisocyanurat und einem weiteren Polymer. Verfahren zur Herstellung dieser Blends sind dem Fachmann bekannt.

Ist der Reaktivschaumstoff auf Basis eines Polyurethans, so ist es außerdem bevorzugt, dass es sich um einen Polyurethanschaumstoff, insbesondere um einen Polyurethanhartschaumstoff handelt.

Darüber hinaus ist es bevorzugt, dass der Reaktivschaumstoff auf Basis eines Polyurethans, eines Polyharnstoffs oder eines Polyisocyanurats ist,

i) wobei das Polyurethan, der Polyharnstoff oder das Polyisocyanurat jeweils nach einem Doppelbandschäumverfahren, umfassend die oben genannten Schritte I-1) bis IV-1) hergestellt wird und bei dem die in Schritt I-1) bereitgestellte reaktive Mischung als erste Komponente (K1) mindestens ein Polyisocyanat und als zweite Komponente (K2) mindestens eine Verbindung mit gegenüber Isocyanaten reaktiven Gruppen sowie als weitere Komponente mindestens ein Treibmittel enthält, oder

ii) wobei das Polyurethan, der Polyharnstoff oder das Polyisocyanurat jeweils nach einem Blockschäumverfahren umfassend die oben genannten Schritte I-2) bis III-2) hergestellt wird und bei dem in Schritt I-2) bereitgestellte reaktive Mischung als erste Komponente (K1) mindestens ein Polyisocyanat und als zweite Komponente (K2) mindestens eine Verbindung mit gegenüber Isocyanaten reaktiven Gruppen sowie als weitere Komponente mindestens ein Treibmittel enthält.

Anders ausgedrückt ist das Polyurethan, der Polyharnstoff oder das Polyisocyanat jeweils bevorzugt nach einem Doppelbandschäumverfahren, umfassend die oben genannten Schritte I-1) bis IV-1) erhältlich.

Anders ausgedrückt ist das Polyurethan, der Polyharnstoff oder das Polyisocyanat jeweils bevorzugt nach einem Blockschäumverfahren, umfassend die oben genannten Schritte I-2) bis III-2) erhältlich.

Am meisten bevorzugt ist der Reaktivschaumstoff auf Basis eines Polyurethans, eines Polyharnstoffs oder eines Polyisocyanats, das jeweils nach einem Doppelbandschäumverfahren, umfassend die oben genannten Schritte I-1) bis IV-1) hergestellt wird und bei dem die erste Komponente (K1) ausgewählt ist aus Diphenylmethyldiisocyanat und polymeren Diphenylmethandiisocyanaten und die zweite Komponente (K2) mindestens eine Verbindung mit gegenüber Isocyanaten reaktiven Gruppen ist, die ausgewählt ist aus der Gruppe bestehend aus Polyetherpolyolen, Polyesterpolyolen und Polyaminen, wobei die mindestens eine Verbindung mit gegenüber Isocyanaten reaktiven Gruppen eine Funktionalität von 2 bis 8 aufweist und wobei, wenn die zweite Komponente (K2) ausgewählt ist aus Polyetherpolyolen und Polyesterpolyolen, die mindestens eine Verbindung mit gegenüber Isocyanaten reaktiven Gruppen eine mittlere Hydroxylzahl von 12 bis 1200 mg KOH/g aufweist und die reaktive Mischung eine weitere Komponente, die mindestens ein Treibmittel, das Wasser enthält, umfasst oder der Reaktivschaumstoff ist auf Basis eines Polyurethans, eines Polyharnstoffs oder eines Polyisocyanats, das jeweils nach einem Blockschäumverfahren umfassend die oben genannten Schritte I-2) bis III-2) hergestellt wird und bei dem die erste Komponente (K1) ausgewählt ist aus Diphenylmethyldiisocyanat und polymeren Diphenylmethandiisocyanat und die zweite Komponente (K2) mindestens eine Verbindung mit gegenüber Isocyanaten reaktiven Gruppen ist, die ausgewählt ist aus der Gruppe bestehend aus Polyetherpolyolen, Polyesterpolyolen und Polyaminen, wobei die mindestens eine Verbindung mit gegenüber Isocyanaten reaktiven Gruppen eine Funktionalität von 2 bis 8 aufweist und wobei, wenn die zweite Komponente (K2) ausgewählt ist aus Polyetherpolyolen und Polyesterpolyolen, die mindestens eine Verbindung mit gegenüber Isocyanaten reaktiven Gruppen eine mittlere Hydroxylzahl von 12 bis 1200 mg KOH/g aufweist und die reaktive Mischung eine weitere Komponente, die mindestens ein Treibmittel, das Wasser enthält, umfasst.

Das im Reaktivschaumstoff enthaltene Polymer weist vorzugsweise eine Glasübergangstemperatur ($T_G$) von mindestens 80 °C, bevorzugt von mindestens 110 °C und insbesondere bevorzugt von mindestens 130 °C auf, bestimmt mittels Differenzthermoanalyse (DTA; differential scanning calorimetry; DSC). Die Glasübergangstemperatur des im Reaktivschaumstoff enthaltenen Polymers liegt im Allgemeinen bei höchstens 400 °C, bevorzugt bei höchstens 300 °C, insbesondere bei höchstens 200 °C, bestimmt mittels Differenzthermoanalyse (DTA).

Durch die Herstellung des Reaktivschaumstoffs nach einem Doppelbandschäumverfahren oder einem Blockschäumverfahren wird erfindungsgemäß ein anisotroper Reaktivschaumstoff erhalten. Dies bedeutet, dass ein Formkörper bevorzugt ist, bei dem der Reaktivschaumstoff Zellen umfasst und zumindest eine der nachfolgenden Optionen erfüllt:

i) mindestens 80 %, bevorzugt mindestens 90 % der Zellen sind anisotrop, und/oder

ii) das Verhältnis der größten Dimension (a-Richtung) zur kleinsten Dimension (c-Richtung) von mindestens 50 %, vorzugsweise mindestens 80 %, mehr bevorzugt von mindestens 90 % der Zellen, liegt ≥ 1,05, bevorzugt im Bereich von 1,1 bis 10, insbesondere bevorzugt im Bereich von 1,2 bis 5, und/oder

iii) die mittlere Größe der kleinsten Dimension (c-Richtung) von mindestens 50 %, vorzugsweise mindestens 80 %, mehr bevorzugt von mindestens 90 %, der Zellen liegt im Bereich von 0,01 bis 1 mm, vorzugsweise im Bereich von 0,02 bis 0,5 mm und insbesondere bevorzugt im Bereich von 0,02 bis 0,3 mm, und/oder

iv) mindestens 50 %, vorzugsweise mindestens 80 %, mehr bevorzugt mindestens 90 % der Zellen sind orthotrop oder transversal isotrop, und/oder

v) mindestens 50 %, vorzugsweise mindestens 80 %, mehr bevorzugt mindestens 90 %, der Zellen bezogen auf ihre größte Dimension (a-Richtung) in einem Winkel γ von > 70°, bevorzugt von > 80° relativ zur Dickenrichtung (d) des Formkörpers ausgerichtet sind, und/oder

vi) der Reaktivschaumstoff ist zu mindestens 80 %, bevorzugt zu mindestens 95 %, besonders bevorzugt zu mindestens 98 % geschlossenzellig, und/oder

vii) die Faser (F) befindest sich in einem Winkel ε von ≤ 60 °, bevorzugt von ≤ 50 °, relativ zur größten Dimension (a-Richtung) von mindestens 50 %, vorzugsweise von mindestens 80 %, mehr bevorzugt von mindestens 90 % der Zellen des Reaktivschaumstoffs.

Eine anisotrope Zelle weist in unterschiedlichen Raumrichtungen unterschiedliche Dimensionen auf. Die größte Dimension der Zelle wird als a-Richtung und die kleinste Dimension als c-Richtung bezeichnet, die dritte Dimension wird als b-Richtung bezeichnet.

Die mittlere Größe der kleinsten Dimension (c-Richtung) von mindestens 50 %, vorzugsweise mindestens 80 %, mehr bevorzugt mindestens 90 % der Zellen liegt üblicherweise im Bereich von 0,01 bis 1 mm, vorzugsweise im Bereich von 0,02 bis 0,5 mm und insbesondere im Bereich von 0,02 bis 0,3 mm.

Die mittlere Größe der größten Dimension (a-Richtung) von mindestens 50 %, vorzugsweise mindestens 80 %, mehr bevorzugt mindestens 90 %, der Zellen liegt üblicherweise bei maximal 20 mm, bevorzugt im Bereich von 0,01 bis 5 mm, insbesondere im Bereich von 0,03 bis 1 mm, und besonders bevorzugt zwischen 0,03 und 0,5 mm.

Die Dimensionen der Zellen können beispielsweise durch lichtmikroskopische oder rasterelektronenmikroskopische Aufnahmen bestimmt werden.

Zur Bestimmung der mittleren Größe der kleinsten Dimension (c-Richtung) wird die Größe der Zellen in ihrer kleinsten Dimension wie vorstehend beschrieben, bestimmt, die Werte addiert und durch die Zahl der Zellen dividiert. Entsprechend erfolgt die Bestimmung der mittleren Größe der größten Dimension (a-Richtung).

Unter einer orthotropen Zelle wird ein Sonderfall einer anisotropen Zelle verstanden. Orthotrop bedeutet, dass die Zellen drei Symmetrieebenen aufweisen. Im Fall, dass die Symmetrieebenen orthogonal zueinander orientiert sind, sind bezogen auf ein rechtwinkliges Koordinatensystem die Dimensionen der Zelle in allen drei Raumrichtungen, also in der a-Richtung, in der b-Richtung und in der c-Richtung, unterschiedlich.

Transversal isotrop bedeutet, dass die Zellen drei Symmetrieebenen aufweisen. Gegenüber der Drehung um eine Achse, die die Schnittachse zweier Symmetrieebenen ist, sind die Zellen aber invariant. Im Fall, dass die Symmetrieebenen orthogonal zueinander orientiert sind, ist nur die Dimension der Zelle einer Raumrichtung von der Dimension der Zelle der beiden anderen unterschiedlich. Beispielsweise unterscheidet sich die Dimension der Zelle in a-Richtung von der in b-Richtung und der in c-Richtung und die Dimensionen der Zelle in b-Richtung und die in c-Richtung sind gleich.

Die Geschlossenzelligkeit des Reaktivschaumstoffs wird nach DIN ISO 4590 bestimmt (Stand deutsche Version 2003). Die Geschlossenzelligkeit beschreibt den Volumenanteil geschlossener Zellen am Gesamtvolumen des Reaktivschaumstoffs.

Die anisotropen Eigenschaften der Zellen des Reaktivschaumstoffs resultieren aus dem erfindungsgemäßen Doppelbandschäumverfahren oder dem erfindungsgemäßen Blockschäumverfahren. Indem in dem Doppelbandschäumverfahren die reaktive Mischung in Schritt III-1) expandiert und in Schritt IV-1) kalibriert wird, erhält der Reaktivschaumstoff üblicherweise anisotrope Eigenschaften, die aus den anisotropen Zellen resultieren. Die Eigenschaften werden zudem durch die Expansionseigenschaften und die Abzugsparameter beeinflusst. Expandiert die reaktive Mischung zwischen dem unteren Trägermaterial und dem oberen Trägermaterial unter Erhalt des expandierten Schaumstoffs sehr stark, so expandiert sie beispielsweise in x-Richtung, also in der Länge, was vorzugsweise zu einer Ausrichtung der a-Richtung der Zellen relativ zur z-Richtung führt.

Wird der expandierte Schaumstoff beispielsweise schnell abgezogen, also schnell zwischen den zwei parallelen Bändern kalibriert, so richtet sich die a-Richtung der Zellen vorzugsweise im Bereich von 50 bis 130° relativ zur z-Richtung aus.

Entsprechendes gilt für einen durch ein erfindungsgemäßes Blockschäumverfahren hergestellten Reaktivschaumstoff. Durch die freie Expansion des Schaumstoffs richten sich die Schaumzellen in Steigrichtung aus. Daraus resultiert eine anisotrope Schaumstruktur und folglich anisotrope Eigenschaften.

Der Winkel γ, in dem mindestens 50 %, vorzugsweise mindestens 80 %, mehr bevorzugt mindestens 90 %, der Zellen bezogen auf ihre größte Dimension (a-Richtung) relativ zur Dickenrichtung (d) des Formkörpers ausgerichtet sind, liegt erfindungsgemäß bei > 60°.

Figur 4 zeigt beispielhaft eine schematische Darstellung der verschiedenen Winkel, die auf die größte Dimension (a-Richtung) der Zelle (8) bezogen sind. Der in Figur 4 dargestellte Formkörper aus Reaktivschaumstoff (1) enthält eine Faser (4) und eine Zelle (8). Der Übersichtlichkeit halber ist in Figur 4 nur eine Faser (4) und eine Zelle (8) dargestellt. Es versteht sich von selbst, dass der Formkörper üblicherweise mehr als eine Zelle (8) umfasst. Die größte Dimension (a) der Zelle (8) weist relativ zur Dickenrichtung (d) des Formkörpers einen Winkel γ auf. Die Faser (4) ist in einem Winkel ε relativ zur größten Dimension (a) der Zelle (8) in den Reaktivschaumstoff eingebracht.

Sind die Eigenschaften des Reaktivschaumstoffs anisotrop, so bedeutet dies, dass sich die Eigenschaften des Reaktivschaumstoffs in verschiedenen Raumrichtungen unterscheiden. Beispielsweise kann die Druckfestigkeit des Reaktivschaumstoffs in der Dicke (z-Richtung) anders sein als in der Länge (x-Richtung) und/oder in der Breite (y-Richtung).

Im Rahmen der Erfindung ist ein Formkörper bevorzugt, der zumindest eine der folgenden Optionen erfüllt:

i) alle mechanischen Eigenschaften des Reaktivschaumstoffs sind anisotrop, vorzugsweise orthotrop oder transversal isotrop, und/oder

ii) zumindest eines der elastischen Moduli, vorzugsweise alle elastischen Moduli, des Reaktivschaumstoffs verhalten sich gemäß einem anisotropen, vorzugsweise orthotropen oder transversal isotropen Werkstoff, und/oder

iii) das Verhältnis der Druckfestigkeit des Reaktivschaumstoffs in der z-Richtung zu der Druckfestigkeit des Reaktivschaumstoffs in der x-Richtung ist $\geq 1,1$, vorzugsweise $\geq 1,5$, insbesondere bevorzugt zwischen 2 und 10, und/oder

Unter mechanischen Eigenschaften werden sämtliche dem Fachmann bekannten mechanischen Eigenschaften von Reaktivschaumstoffen verstanden, wie beispielsweise die Festigkeit, Steifigkeit bzw. Elastizität, Duktilität und Zähigkeit.

Die elastischen Moduli sind dem Fachmann als solche bekannt. Zu den elastischen Moduli gehören beispielsweise das Elastizitätsmodul, das Kompressionsmodul, das Torsionsmodul und das Schubmodul.

"Orthotrop" in Bezug auf die mechanischen Eigenschaften bzw. die elastischen Moduli bedeutet, dass das Material drei Symmetrieebenen aufweist. Im Fall, dass die Symmetrieebenen orthogonal zueinander orientiert sind, gilt ein rechtwinkliges Koordinatensystem. Die mechanischen Eigenschaften bzw. die elastischen Moduli des Reaktivschaumstoffs in allen drei Raumrichtungen, x-Richtung, y-Richtung und z-Richtung, unterscheiden sich damit.

"Transversal isotrop" in Bezug auf die mechanischen Eigenschaften bzw. die elastischen Moduli bedeutet, dass das Material drei Symmetrieebenen aufweist und gegenüber der Drehung um eine Achse, die die Schnittachse zweier Symmetrieebenen ist, die Moduli invariant sind. Im Fall, dass die Symmetrieebenen orthogonal zueinander orientiert sind, sind die mechanischen Eigenschaften bzw. die elastischen Moduli des Reaktivschaumstoffs in einer Raumrichtung von denen in den beiden anderen Raumrichtungen unterschiedlich, die in den beiden anderen Raumrichtungen aber gleich. Beispielsweise unterscheiden sich die mechanischen Eigenschaften bzw. die elastischen Moduli in z-Richtung von denen in x-Richtung und in y-Richtung, die in x-Richtung und in $\gamma$-Richtung sind gleich.

Die Druckfestigkeit des Reaktivschaumstoffs des Formkörpers wird nach DIN EN ISO 844 bestimmt (gemäß Stand deutsche Version Oktober 2009).

Die Druckfestigkeit des Reaktivschaumstoffs in der Dicke (z-Richtung) liegt üblicherweise im Bereich von 0,05 bis 5 MPa, bevorzugt im Bereich von 0,1 bis 2 MPa, besonders bevorzugt im Bereich von 0,1 bis 1 MPa.

Gegenstand der vorliegenden Erfindung ist außerdem ein Paneel, das mindestens einen erfindungsgemäßen Formkörper und mindestens eine Schicht (S1) umfasst. Ein "Paneel" kann gegebenenfalls in Fachkreisen auch als "Sandwich", "Sandwichmaterial", "Laminat" und/oder "Compositartikel" bezeichnet werden.

In einer bevorzugten Ausführungsform des Paneels weist das Paneel zwei Schichten (S1) auf, und die beiden Schichten (S1) sind jeweils an einer Seite des Formkörpers angebracht, die der jeweils anderen Seite im Formkörper gegenüberliegt.

In einer Ausführungsform des erfindungsgemäßen Paneels umfasst die Schicht (S1) mindestens ein Harz, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen. Derartige Harzsysteme sind dem Fachmann bekannt, beispielsweise aus Penczek et al. (Advances in Polymer Science, 184, S. 1 - 95, 2005), Pham et al. (Ullmann's Encyclopedia of Industrial Chemistry, Vol. 13, 2012), Fahnler (Polyamide, Kunststoff Handbuch 3/4, 1998) und Younes (WO12134878 A2).

Erfindungsgemäß bevorzugt ist außerdem ein Paneel, das zumindest eine der folgenden Optionen erfüllt:

i) der Faserbereich (FB1) der Faser (F) ist teilweise oder vollständig, vorzugsweise vollständig, mit der ersten Schicht (S1) in Kontakt, und/oder

ii) der Faserbereich (FB3) der Faser (F) ist teilweise oder vollständig, vorzugsweise vollständig, mit der zweiten Schicht (S1) in Kontakt, und/oder

iii) das Paneel weist zwischen mindestens einer Seite des Formkörpers und mindestens einer Schicht (S1) mindestens eine Schicht (S2) auf, vorzugsweise ist die Schicht (S2) aus flächigen Fasermaterialien oder polymeren Folien, mehr bevorzugt aus porösen flächigen Fasermaterialien oder porösen polymeren Folien, insbesondere bevorzugt aus Papier, Glasfasern oder Kohlenstofffasern in Form von Vliesen, Gelegen oder Geweben.

Als Porosität wird das Verhältnis (dimensionslos) von Hohlraumvolumen (Porenvolumen) zu dem Gesamtvolumen eines Reaktivschaumstoffs bezeichnet. Sie wird beispielsweise durch bildanalytische Auswertung mikroskopischer Aufnahmen bestimmt, indem das Hohlraum- bzw. Porenvolumen durch das Gesamtvolumen geteilt wird. Die Gesamtporosität eines Stoffes setzt sich zusammen aus der Summe der Hohlräume, die untereinander und mit der Umgebung in Verbindung stehen (offene Porosität) und den nicht miteinander verbundenen Hohlräumen (geschlossene Porosität). Bevorzugt sind Schichten (S2), die eine hohe offene Porosität aufweisen.

Es ist außerdem bevorzugt, dass die mindestens eine Schicht (S1) des Paneels zusätzlich mindestens ein faserförmiges Material enthält, wobei

i) das faserförmige Material Fasern in Form von einer oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m$^2$ enthält, und/oder

ii) das faserförmige Material Fasern aus organischen, anorganischen, metallischen oder keramischen Fasern, bevorzugt polymere Fasern, Basaltfasern, Glasfasern, Kohlenstofffasern oder Naturfasern, besonders bevorzugt Glasfasern oder Kohlenstofffasern enthält.

Für die Naturfasern und die polymeren Fasern gelten die zuvor beschriebenen Ausführungen.

Eine Schicht (S1), die zusätzlich mindestens ein faserförmiges Material enthält, wird auch als faserverstärkte Schicht, insbesondere als faserverstärkte Harzschicht, sofern die Schicht (S1) ein Harz umfasst, bezeichnet.

Figur 2 zeigt eine weitere bevorzugte Ausführungsform der vorliegenden Erfindung. In einer zweidimensionalen Seitansicht ist ein erfindungsgemäßes Paneel (7) dargestellt, das einen erfindungsgemäßen Formkörper (1) umfasst, wie beispielsweise vorstehend im Rahmen der Ausführungsform zu Figur 1 dargestellt. Soweit nicht anders ausgeführt, haben die Bezugszeichen und sonstigen Abkürzungen in den Figuren 1 und 2 die gleiche Bedeutung.

Bei der Ausführungsform gemäß Figur 2 umfasst das erfindungsgemäße Paneel zwei Schichten (S1), die durch (5) und (6) dargestellt sind. Die beiden Schichten (5) und (6) befinden sich somit an jeweils zu einander gegenüberliegenden Seiten des Formkörpers (1). Bei den beiden Schichten (5) und (6) handelt es sich vorzugsweise um Harzschichten oder faserverstärkte Harzschichten. Wie aus Figur 2 weiterhin ersichtlich, sind die beiden Enden der Faser (4) von der jeweiligen Schicht (5) bzw. (6) umschlossen.

Gegebenenfalls können zwischen dem Formkörper (1) und der ersten Schicht (5) und/oder zwischen dem Formkörper (1) und der zweiten Schicht (6) eine oder mehrere weitere Schichten enthalten sein. Wie vorstehend für Figur 1 beschrieben, ist auch in Figur 2 der Einfachheit halber eine einzige Faser (F) durch (4) dargestellt. Hinsichtlich der Anzahl an Fasern bzw. Faserbündeln in der Praxis gelten die sinngemäßen Aussagen wie vorstehend für Figur 1 aufgeführt.

Weiterhin ist ein Paneel bevorzugt, bei dem zumindest eine der folgenden Alternativen erfüllt ist:

i) der im Paneel enthaltene Formkörper enthält mindestens eine Seite, die nicht mechanisch und/oder thermisch bearbeitet wurde, und/oder

ii) das Paneel weist zwischen mindestens einer Seite und mindestens einer Schicht (S1) mindestens eine Schicht (S2) auf, wobei die mindestens eine Schicht (S2) als oberes Trägermaterial und/oder als unteres Trägermaterial in Schritt II-1) des Doppelbandschäumverfahrens auf den Reaktivschaumstoff des Formkörpers des Paneels aufgebracht wurde, und/oder

iii) die mindestens eine Schicht (S1) umfasst ein Harz und der Reaktivschaumstoff des Formkörpers des Paneels weist eine oberflächliche Harzaufnahme von $\leq$ 2000 g/m$^2$, vorzugsweise von $\leq$ 1000 g/m$^2$, mehr bevorzugt von $\leq$ 500 g/m$^2$ und am meisten bevorzugt von $\leq$ 100 g/m$^2$ auf, und/oder

iv) das Paneel weist eine Schälfestigkeit von $\geq$ 200 J/m$^2$, bevorzugt von $\geq$ 500 J/m$^2$, besonders bevorzugt von $\geq$ 2000 J/m$^2$ auf, und/oder

v) der Reaktivschaumstoff des im Paneel enthaltenen Formkörpers weist ein Schubmodul gemessen parallel zu der mindestens einen Schicht (S1) im Bereich von 0,05 bis 0,6 MPa/(kg/m$^3$), bevorzugt im Bereich von 0,05 bis 0,5 MPa/(kg/m$^3$), besonders bevorzugt im Bereich von 0,05 bis 0,2 MPa/(kg/m$^3$) auf, und/oder

vi) der im Paneel enthaltene Formkörper weist im Paneel eine spezifische Scherfestigkeit, gemessen parallel zu der mindestens einen Schicht (S1) von mindestens 5 kPa/(kg/m$^3$), bevorzugt von mindestens 8 kPa/(kg/m$^3$), besonders bevorzugt von mindestens 12 kPa/(kg/m$^3$) auf, und/oder

vii) der im Paneel enthaltene Formkörper weist im Paneel ein Schubmodul, gemessen parallel zu der mindestens einen Schicht (S1) von mindestens 0,2 MPa/(kg/m$^3$), bevorzugt von mindestens 0,6 MPa/(kg/m$^3$), besonders bevorzugt von mindestens 1,0 MPa/(kg/m$^3$), auf.

Die spezifische Scherfestigkeit und das Schubmodul werden gemäß DIN 53294 (Stand: 1982) und die Dichte nach ISO 845 (Stand: 2007) bestimmt.

Das Schubmodul des Formkörpers gemäß Alternative v) bezieht sich auf das Schubmodul des Reaktivschaumstoffs des Formkörpers ohne die mindestens eine Schicht (S1) und ohne die Faser (F). Lediglich die Messung erfolgt parallel zu der Seite, an der im Paneel die mindestens eine Schicht (S1) aufgebracht wird.

Die Schälfestigkeit des Paneels wird mit single cantilever beam (SCB)-Proben bestimmt. Die Dicke der Formkörper liegt bei 20 mm, die Schichten (S1) bestehen aus jeweils etwa 2 mm dicken quasiisotropen glasfaserverstärkten Epoxidharzschichten. Die Paneele werden dann in einer Zwick Z050 Zugprüfmaschine mit einer Geschwindigkeit von 5 mm/min geprüft, wobei das Paneel drei- bis viermal be- und entlastet wird. Das Risswachstum bzw. der Zuwachs bei jedem Belastungszyklus (Δa) wird optisch ermittelt. Aus dem Kraft-Weg-Verlauf wird die Risswachstumsenergie (ΔU) ermittelt. Daraus wird die Risszähigkeit bzw. Schälfestigkeit ermittelt als

$$G_{IC} = \frac{\Delta U}{B\,\Delta a}$$

mit B als Probenbreite.

Es ist erfindungsgemäß außerdem ein Paneel bevorzugt, bei dem die Seite des Formkörpers, an der die mindestens eine Schicht (S1) aufgebracht ist, eine oberflächliche Harzaufnahme von ≤ 2000 g/m$^2$, bevorzugt von ≤ 1000 g/m$^2$, besonders bevorzugt von ≤ 500 g/m$^2$, insbesondere bevorzugt von ≤ 100 g/m$^2$ aufweist und dass mindestens eine Fläche, bevorzugt alle Flächen des Formkörpers, die senkrecht zu der Seite des Formkörpers, an der die mindestens eine Schicht (S1) aufgebracht ist, liegt, eine oberflächliche Harzaufnahme aufweist, die sich um mindestens 10 %, bevorzugt um mindestens 20 %, insbesondere bevorzugt um mindestens 50 % von der oberflächlichen Harzaufnahme der Seite des Formkörpers unterscheidet, an der die mindestens eine Schicht (S1) aufgebracht ist.

Zur Bestimmung der Harzaufnahme werden neben den eingesetzten Harzsystemen, dem Reaktivschaumstoff und Glasgelegen die folgende Hilfsmaterialien verwendet: Nylon Vakuumfolie, Vakuumdichtband, Nylon Fließhilfe, Polyolefin Trennfolie, Polyester Abreißgewebe sowie PTFE Membranfolie und Polyester Absaugvlies. Paneele, nachfolgend auch als Sandwichmaterialien bezeichnet, werden aus den Formkörpern durch Aufbringung faserverstärkter Decklagen mittels Vakuuminfusion hergestellt. An der Ober- und Unterseite der (faserverstärkten) Schaumstoffe werden je zwei Lagen Quadrax-Glasgelege (Roving: E-Glass SE1500, OCV; Textil: Saertex, isotropes Laminat [0°/-45°/90°45°] mit je 1200 g/m$^2$) aufgebracht. Für die Bestimmung der Harzaufnahme wird zwischen dem Formkörper, nachfolgend auch als Kernmaterial bezeichnet, und dem Glasgelege, im Gegensatz zur standardmäßigen Herstellung der Paneele, eine Trennfolie eingelegt. Damit ist die Harzaufnahme des reinen Formkörpers bestimmbar. Auf den Glasgelegen werden beidseitig das Abreißgewebe und die Fließhilfen angebracht. Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Der Aufbau wird auf einem elektrisch beheizbaren Tisch mit einer Glasoberfläche vorbereitet.

Als Harzsystem wird aminisch härtendes Epoxid verwendet (Harz: BASF Baxxores 5400, Härter: BASF Baxxodur 5440, Mischungsverhältnis und weitere Verarbeitung nach Datenblatt). Nach dem Mischen der beiden Komponenten wird das Harz für 10 min bei bis zu 20 mbar evakuiert. Bei einer Harztemperatur von 23 $^+$/- 2 °C erfolgt die Infusion auf den vortemperierten Aufbau (Tischtemperatur: 35 °C). Durch anschließende Temperaturrampe von 0,3 K/min von 35 °C auf 75 °C und isothermer Aushärtung bei 75 °C für 6 h können Paneele hergestellt werden, die aus den Reaktivschaumstoffen und glasfaserverstärkten Decklagen bestehen.

Zu Beginn werden die Formkörper nach ISO 845 (Stand Oktober 2009) vermessen, um die Rohdichte des Schaumes zu erhalten. Nach dem Aushärten des Harzsystems werden die verarbeiteten Paneele besäumt, um überschüssige Harzansammlungen in den Randbereichen durch nicht passend anliegende Vakuumfolie zu eliminieren.

Anschließend werden die Decklagen entfernt und die enthaltenen Formkörper erneut durch ISO 845 vermessen. Aus der Differenz der Dichten ergibt sich die absolute Harzaufnahme. Durch Multiplikation mit der Dicke des Formkörpers ergibt sich die entsprechende Harzaufnahme in kg/m$^2$.

Gegenstand der vorliegenden Erfindung ist weiterhin ein Verfahren zur Herstellung des erfindungsgemäßen Formkörpers, wobei mindestens eine Faser (F) in den Reaktivschaumstoff teilweise eingebracht wird, wodurch sich die Faser (F) mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt.

Zum Einbringen der Faser (F) und/oder eines Faserbündels eignen sich prinzipiell alle dem Fachmann bekannten Methoden. Geeignete Verfahren sind beispielsweise in WO 2006/125561 oder in WO 2011/012587 beschrieben.

In einer Ausführungsform des erfindungsgemäßen Verfahrens erfolgt das teilweise Einbringen der mindestens einen Faser (F) in den Reaktivschaumstoff durch Einnähen unter Verwendung einer Nadel, vorzugsweise erfolgt das teilweise Einbringen durch die Schritte a) bis f):

a) gegebenenfalls Aufbringen von mindestens einer Schicht (S2) auf mindestens eine Seite des Reaktivschaumstoffs,

b) Erzeugung von einem Loch je Faser (F) im Reaktivschaumstoff und gegebenenfalls in der Schicht (S2), wobei sich das Loch von einer ersten Seite zu einer zweiten Seite des Reaktivschaumstoffs und gegebenenfalls durch die Schicht (S2) erstreckt,

c) Bereitstellung von mindestens einer Faser (F) auf der zweiten Seite des Reaktivschaumstoffs,

d) Durchführen einer Nadel von der ersten Seite des Reaktivschaumstoffs durch das Loch zu der zweiten Seite des Reaktivschaumstoffs und gegebenenfalls Durchführung der Nadel durch die Schicht (S2),

e) Befestigen von mindestens einer Faser (F) an der Nadel auf der zweiten Seite des Reaktivschaumstoffs, und

f) Rückführen der Nadel samt Faser (F) durch das Loch, so dass die Faser (F) sich mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers oder gegebenenfalls der Schicht (S2) herausragt und der Faserbereich (FB3) der Faser (F) aus einer zweiten Seite des Formkörpers herausragt,

besonders bevorzugt werden die Schritte b) und d) gleichzeitig durchgeführt.

Das Aufbringen der mindestens einen Schicht (S2) auf mindestens eine Seite des Reaktivschaumstoffs in Schritt a) kann beispielsweise wie vorstehend beschrieben während Schritt II-1) des Doppelbandschäumverfahrens erfolgen. In diesem Fall ist die Schicht (S2) das untere Trägermaterial und/oder das obere Trägermaterial.

Ebenso ist es beispielsweise möglich, dass die mindestens eine Schicht (S2) während Schritt II-2) und Schritt III-2) des Blockschäumverfahrens auf mindestens eine Seite des Reaktivschaumstoffs in Schritt a) während Schritt II-2) und Schritt III-2) des Blockschäumverfahrens aufgebracht wird, wenn das formgebende Werkzeug in Schritt II-2) Träger- und/oder Trennschichten enthält.

In einer besonders bevorzugten Ausführungsform werden die Schritte b) und d) gleichzeitig durchgeführt. In dieser Ausführungsform wird das Loch von der ersten Seite zu der zweiten Seite des Reaktivschaumstoffs durch das Durchführen einer Nadel von der ersten Seite des Reaktivschaumstoffs zu der zweiten Seite des Reaktivschaumstoffs erzeugt.

In dieser Ausführungsform kann das Einbringen der mindestens einen Faser (F) beispielsweise die folgenden Schritte umfassen:

a) gegebenenfalls Aufbringen einer Schicht (S2) auf mindestens eine Seite des Reaktivschaumstoffs,

b) Bereitstellen von mindestens einer Faser (F) auf der zweiten Seite des Reaktivschaumstoffs,

c) Erzeugung von einem Loch je Faser (F) im Reaktivschaumstoff und gegebenenfalls in der Schicht (S2), wobei sich das Loch von der ersten Seite zu einer zweiten Seite des Reaktivschaumstoffs und gegebenenfalls durch die Schicht (S2) erstreckt und wobei die Erzeugung des Lochs durch das Durchführen einer Nadel durch den Reaktivschaumstoffs und gegebenenfalls durch die Schicht (S2) erfolgt,

d) Befestigen von mindestens einer Faser (F) an der Nadel auf der zweiten Seite des Reaktivschaumstoffs,

e) Rückführen der Nadel samt Faser (F) durch das Loch, so dass die Faser (F) sich mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers oder gegebenenfalls aus der Schicht (S2) herausragt und der Faserbereich (FB3) aus einer zweiten Seite des Formkörpers herausragt,

f) gegebenenfalls Abschneiden der Faser (F) an der zweiten Seite und

g) gegebenenfalls Aufschneiden der an der Nadel gebildeten Schlaufe der Faser (F).

In einer bevorzugten Ausführungsform wird als Nadel eine Hakennadel eingesetzt und mindestens eine Faser (F) in Schritt d) in die Hakennadel eingehängt.

In einer weiteren bevorzugten Ausführungsform werden mehrere Fasern (F) gleichzeitig in den Reaktivschaumstoff gemäß der vorher beschriebenen Schritte eingebracht.

Im erfindungsgemäßen Verfahren ist es außerdem bevorzugt, dass Vertiefungen im Formkörper teilweise oder vollständig vor dem Einbringen von mindestens einer Faser (F) in den Reaktivschaumstoff eingebracht werden.

Weiterhin Gegenstand der vorliegenden Erfindung ist ein Verfahren zur Herstellung des erfindungsgemäßen Paneels, bei dem die mindestens eine Schicht (S1) als reaktives viskoses Harz auf einen erfindungsgemäßen Formkörper erzeugt, aufgebracht und ausgehärtet wird, vorzugsweise durch Flüssigimprägnierverfahren, besonders bevorzugt durch Druck- bzw. vakuumunterstützte Imprägnierverfahren, insbesondere bevorzugt durch Vakuuminfusion oder druckunterstützte Injektionsverfahren, am meisten bevorzugt durch Vakuuminfusion. Flüssigimprägnierverfahren sind dem Fachmann als solche bekannt und werden beispielsweise in Wiley Encyclopedia of Composites (2nd Edition, Wiley, 2012), Parnas et al. (Liquid Composite Moulding, Hanser, 2000) und Williams et al. (Composites Part A, 27, S. 517 - 524, 1997) ausführlich beschrieben.

Zur Herstellung des erfindungsgemäßen Paneels können verschiedene Hilfsmaterialien eingesetzt werden. Geeignete Hilfsmaterialien für die Herstellung durch Vakuuminfusion sind beispielsweise Vakuumfolie, bevorzugt aus Nylon, Vakuumdichtband, Fließhilfe, bevorzugt aus Nylon, Trennfolie, bevorzugt aus Polyolefin, Abreißgewebe, bevorzugt aus Polyester sowie eine semipermeable Folie, vorzugsweise eine Membranfolie, besonders bevorzugt eine PTFE Membranfolie und Absaugvlies, bevorzugt aus Polyester. Die Wahl geeigneter Hilfsmaterialien richtet sich nach dem zu fertigenden Bauteil, dem gewählten Prozess und den eingesetzten Materialien, speziell dem Harzsystem. Beim Einsatz von Harzsystemen auf der Basis von Epoxid und Polyurethan werden bevorzugt Fließhilfen aus Nylon, Trennfolien aus Polyolefin, Abreißgewebe aus Polyester sowie eine semipermeable Folien als PTFE-Membranfolien und Absaugvliese aus Polyester eingesetzt.

Diese Hilfsmaterialien können auf verschiedene Arten bei den Verfahren zur Herstellung des erfindungsgemäßen Paneels eingesetzt werden. Paneele werden besonders bevorzugt aus den Formkörpern durch Aufbringung faserverstärkter Decklagen mittels Vakuuminfusion hergestellt. In einem typischen Aufbau werden zur Herstellung des erfindungsgemäßen Paneels an der Ober- und Unterseite der Formkörper faserförmige Materialien und ggf. weitere Schichten aufgebracht. Anschließend werden Abreißgewebe und Trennfolien platziert. Bei der Infusion des flüssigen Harzsystems kann mit Fließhilfen und / oder Membranfolien gearbeitet werden. Besonders bevorzugt sind die folgenden Varianten:

    i) Einsatz einer Fließhilfe auf nur einer Seite des Aufbaus, und/oder

    ii) Einsatz einer Fließhilfe auf beiden Seiten des Aufbaus, und/oder

    iii) Aufbau mit einer semipermeablen Membran (VAP-Aufbau), diese wird vorzugsweise flächig über den Formkörper drapiert, auf dem Fließhilfen, Trennfolie und Abreißgewebe auf einer oder beiden Seiten eingesetzt werden und die semipermeable Membran durch Vakuumdichtband zur Formoberfläche hin abgedichtet wird, das Absaugvlies wird auf der Formkörper fremden Seite der semipermeablen Membran eingesetzt wodurch die Luft flächig nach oben evakuiert wird, und/oder

    iv) Verwendung einer Vakuumtasche aus Membranfolie, die bevorzugt auf die gegenüberliegende Anguss-Seite des Formkörpers platziert wird, womit die Luft von der gegenüberliegenden Seite zum Anguss evakuiert wird.

Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Nach der Infusion des Harzsystems findet unter Aufrechterhaltung des Vakuums die Reaktion des Harzsystems statt.

Gegenstand der vorliegenden Erfindung ist außerdem die Verwendung des erfindungsgemäßen Formkörpers oder des erfindungsgemäßen Paneels für Rotorblätter in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

Nachfolgend wird die vorliegende Erfindung anhand von Beispielen näher erläutert ohne sie hierauf zu beschränken.

Beispiele

*Charakterisierung*

Die Eigenschaften der Reaktivschaumstoffe, der Formkörper und der Paneele werden wie folgt bestimmt:

- Anisotropie:
  für die Bestimmung der Anisotropie werden mikroskopische Aufnahmen der Zellen des Mittelbereichs des Reaktivschaumstoffs statistisch ausgewertet. Die größte Dimension der Zelle wird als a-Richtung bezeichnet, die beiden anderen orthogonal dazu orientierten Dimensionen (b-Richtung und c-Richtung) resultieren daraus. Die Anisotropie ergibt sich als Quotient zwischen der a-Richtung und der c-Richtung.

- Orientierung der a-Richtung der Zelle relativ zur Dickenrichtung (d); Winkel $\gamma$:
  Die Orientierung der a-Richtung der Zelle wird ebenfalls durch mikroskopische Aufnahmen ausgewertet. Der eingeschlossene Winkel zwischen der a-Richtung und der Dickenrichtung (d) des Formkörpers gibt die Orientierung wieder.

- Kleinste Dimension der Zelle (c-Richtung):
  Analog wie die Anisotropie wird durch statistische Analyse der mikroskopischen Aufnahmen, die kleinste Dimension der Zellen bestimmt.

- Druckfestigkeit entlang z-Richtung und entlang a-Richtung:
  Die Druckfestigkeit wird in Anlehnung an DIN EN ISO 844 bestimmt (Stand deutsche Version, Oktober 2009)

- Verhältnis Druckfestigkeit des Reaktivschaumstoffs entlang der z-Richtung zur Druckfestigkeit des Reaktivschaumstoffs entlang x-Richtung (Druckfestigkeit z/x):
  Das Verhältnis der Druckfestigkeit entlang der z-Richtung zur Druckfestigkeit der x-Richtung wird durch den Quotient aus den beiden Einzelwerten bestimmt.

- Dichte:
  Die Dichte der reinen Reaktivschaumstoffe wird nach ISO 845 (Stand Oktober 2009) bestimmt.

- Harzaufnahme:
  Für die Harzaufnahme werden Reaktivschaumstoffe nach spanender Entfernung der Oberfläche durch Hobeln verglichen. Neben den eingesetzten Harzsystemen, den Schaumstoffplatten und Glasgelegen, werden die folgenden Hilfsmaterialien verwendet: Nylon Vakuumfolie, Vakuumdichtband, Nylon Fließhilfe, Polyolefin Trennfolie, Polyester Abreißgewebe sowie PTFE Membranfolie und Polyester Absaugvlies. Paneele werden aus den Formkörpern durch Aufbringung faserverstärkter Decklagen mittels Vakuuminfusion hergestellt. An der Ober- und Unterseite der Reaktivschaumstoffe werden je zwei Lagen Quadrax-Glasgelege (Roving: E-Glass SE1500, OCV; Textil: Saertex, isotropes Laminat [0°/-45°/90°45°] mit je 1200 g/m$^2$) aufgebracht. Für die Bestimmung der Harzaufnahme wird zwischen den Reaktivschaumstoff und das Glasgelege im Gegensatz zur standardmäßigen Herstellung der Paneele, eine Trennfolie eingelegt. Damit ist die Harzaufnahme des reinen Reaktivschaumstoffs bestimmbar. Auf den Glasgelegen werden beidseitig das Abreißgewebe und die Fließhilfen angebracht. Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Der Aufbau wird auf einem elektrisch beheizbaren Tisch mit einer Glasoberfläche vorbereitet.

Als Harzsystem wird aminisch härtendes Epoxid verwendet (Harz: BASF Baxxores 5400, Härter: BASF Baxxodur 5440, Mischungsverhältnis und weitere Verarbeitung nach Datenblatt). Nach dem Mischen der beiden Komponenten wird das Harz für 10 min bei bis zu 20 mbar evakuiert. Bei einer Harztemperatur von 23 $^+$/- 2 °C erfolgt die Infusion auf den vortemperierten Aufbau (Tischtemperatur: 35 °C). Durch anschließende Temperaturrampe von 0,3 K/min von 35 °C auf 75 °C und isothermer Aushärtung bei 75 °C für 6 h können Paneele hergestellt werden, die aus den Formkörpern und glasfaserverstärkten Decklagen bestehen.

Zu Beginn werden die Schaumstoffe nach ISO 845 (Stand Oktober 2009) vermessen, um die Rohdichte des Schaumstoffs zu erhalten. Nach dem Aushärten des Harzsystems werden die verarbeiteten Paneele besäumt, um überschüssige Harzansammlungen in den Randbereichen durch nicht passend anliegende Vakuumfolie zu eliminieren.

Anschließend werden die Decklagen entfernt und die enthaltenen Reaktivschaumstoffe erneut nach ISO 845 vermessen. Aus der Differenz der Dichten ergibt sich die absolute Harzaufnahme. Durch Multiplikation mit der Dicke des Reaktivschaumstoffs ergibt sich die entsprechende Harzaufnahme in kg/m$^2$.

- Schubsteifigkeit und -Festigkeit der Paneele:

Die Schubeigenschaften der Paneele werden nach DIN 53294 bei 23 °C und 50 % relativer Luftfeuchte bestimmt (Stand Februar 1982).

- Knitterfestigkeit der Paneele:

Der Widerstand gegen Knittern der Decklagen (Microwrinkling) wird basierend auf gemessenen Basiseigenschaften des Materials rechnerisch ermittelt. Der Beulwiderstand gegen Knittern der Decklagen lässt sich bestimmen als $\sigma_c = 0{,}85 \cdot \sqrt[3]{E_{C3} \cdot E_f \cdot G_C}$ mit $E_{C3}$: Kernsteifigkeit in Dickenrichtung, $E_f$: Steifigkeit der Deckschicht, $G_C$: Schubsteifigkeit des Kernmaterials.

- Harzaufnahme

Die Harzaufnahme wird aus den hergestellten Paneelen rechnerisch anhand der Dichten bzw. Dicken des Reaktivschaumstoffs und des besäumten Paneels berechnet.

Beispiel B1

*Doppelbandschäumverfahren*

a) Herstellung des Reaktivschaumstoffs

Der Reaktivschaumstoff wurde durch ein kontinuierliches Doppelbandschäumverfahren hergestellt. Die Anlage besteht aus einem oberen und einem unteren Förderband. Die reaktive Mischung wurde kontinuierlich durch einen Hochdruckmischkopf zwischen ein unteres Trägermaterial und ein oberes Trägermaterial injiziert. Das untere Trägermaterial bestand aus einer Aluminiumfolie, das obere Trägermaterial bestand aus einer Aluminiumfolie. Anschließend wurde die reaktive Mischung expandiert und zwischen dem unteren und dem oberen Förderband kalibriert. Der erhaltene Reaktivschaumstoff wurde zu Platten geschnitten. Die Plattendicke betrug 50 mm. Vor der Verstärkung mit der mindestens einen Faser (F) und somit vor der Herstellung des Formkörpers wurden das obere Trägermaterial und das untere Trägermaterial abgezogen und die Platten für die weitere Verarbeitung auf 20 mm spanend gehobelt. Die reaktive Mischung besteht zu 10000 Massenteilen aus der Polyolkomponente Elastopor® H 1131/90, zu 15000 Massenteilen Isocyanatkomponente Lupranat® M 50, sowie den Zusatzstoffen zu je 8 Massenteilen Wasser, 550 Massenteilen Pentan und zu 570 Massenteilen Dimethylcyclohexylamin.

b) Herstellung des Formkörpers

Der Reaktivschaumstoff wird mit Glasfasern (Rovings, E-Glas, 900 tex, 3B) verstärkt. Die Glasfasern werden in Form von Rovings in einem Winkel $\alpha$ von 45° in vier unterschiedlichen Raumrichtungen im Winkel $\beta$ von 90° zueinander eingebracht. Die Glasfasern sind in einem regulären Muster mit gleichen Abständen $a_1 = a_2 = 16$ mm eingebracht. An der ersten Seite und der zweiten Seite werden zusätzlich ca. 5,5 mm der Glasfasern an Überstand gelassen, um die Anbindung an die später eingebrachten Glasfasermatten als Decklagen zu verbessern. Die Fasern bzw. Faserrovings werden durch einen kombinierten Näh-/Häkelprozess automatisiert eingebracht. Zunächst wird mit einer Hakennadel (Durchmesser ca. 1,1 mm) vollständig von der ersten Seite zur zweiten Seite des Reaktivschaumstoffs durchgestochen. Auf der zweiten Seite wird ein Roving in den Haken der Hakennadel eingehängt und anschließend von der zweiten Seite mit der Nadel durch das Loch zurück zur ersten Seite des Reaktivschaumstoffs gezogen. Schließlich wird der Roving an der zweiten Seite abgeschnitten und an der Nadel die gebildete Rovingschlaufe aufgeschnitten. Die Hakennadel ist somit bereit für den nächsten Nähvorgang.

c) Herstellung des Paneels

Anschließend werden Paneele aus den Formkörpern durch Aufbringung faserverstärkter Decklagen mittels Vakuuminfusion hergestellt, wie vorstehend für die Bestimmung der Harzaufnahme beschrieben. Im Gegensatz zur Bestimmung der Harzaufnahme werden zur Herstellung des Paneels zwischen dem Formkörper und den Glasgelegen allerdings keine Trennfolie eingebracht.

Beispiel B2 (Referenz)

*Blockschäumverfahren*

a) Herstellung des Reaktivschaumstoffs

Der Reaktivschaumstoff wurde durch ein diskontinuierliches Blockschäumverfahren hergestellt. Die Anlage besteht aus einer Blockform, bei der der Boden und die Seitenwände geschlossen sind, die Oberseite der Form ist offen. Die reaktive Mischung wurde durch einen Hochdruckmischkopf gemischt und in das formgebende Werkzeug gefüllt. Anschließend expandiert und reagiert das Gemisch innerhalb des formgebenden Werkzeugs. Der erhaltene Reaktivschaumstoffblock wird dann abgekühlt und senkrecht zur Expansionsrichtung zu Platten geschnitten. Die reaktive Mischung zur Herstellung des Reaktivschaumstoffs enthielt folgende Komponenten: saccharose-basiertes Polyetherpolyol (31 Massenteile, Funktionalität 4.5, zahlenmittleres Molekulargewicht 515 g/mol, Viskösität 8000 mPa.s bei 25°C), phtalsäureanhyrid-diethylenglykol-basiertes Polyesterpolyol (28 Massenteile, Funktionalität 2, zahlenmittleres Molekulargewicht 360 g/mol), propylenglykol-basierter Kettenverlängerer (10 Massenteile, Funktionalität 2, zahlenmittleres Molekulargewicht 134 g/mol), propylenglykol-basierter Kettenverlängerer (28 Massenteile, Funktionalität 2, zahlenmittleres Molekulargewicht 190 g/mol), Wasser (1.45 Massenteile), tertiäres aliphatisches Amin als Katalysator (0.07 Massenteile), silikonbasierter Stabilisator (2.0 Massenteile), polymeres MDI (183 Massenteile, Viskosität 200 mPa.s bei 25°C).
Herstellung der Formkörper und des Paneels erfolgt analog zu Beispiel B1.

Beispiel B3

*Blockschäumverfahren*

a) Herstellung des Schaumstoffs

Die Herstellung des Schaumstoffs erfolgt analog zu Beispiel B2 (Referenz). Allerdings wird die Platte nicht senkrecht zur Expansionsrichtung geschnitten, sondern parallel zur Expansionsrichtung.
Die Herstellung der Formkörper und der Paneele erfolgt anlog zu Beispiel B1.
Tabelle 1 zeigt die Ergebnisse für die Reaktivschaumstoffe, die Formkörper und die Paneele gemäß Beispiel B1, Beispiel B2 (Referenz) und Beispiel B3.

Tabelle 1

| | | | B1 | B2 | B3 |
|---|---|---|---|---|---|
| Reaktivschaumstoff | Herstellverfahren | (-) | Doppelband | Block | Block |
| | Polymer | (-) | PU | PU | PU |
| | Anisotropie der Zellhauptachsen | (-) | 1,2 | 1,1 | 1,1 |
| | Y | (°) | 90 | 0 | 90 |
| | c-Richtung | (mm) | 0,09 | 0,21 | 0,21 |
| | Druckfestigkeit entlang a-Richtung | (MPa) | 0,40 | 0,27 | 0,27 |
| | Druckfestigkeit entlang z-Richtung | (MPa) | 0,17 | 0,27 | 0,27 |
| | Druckfestigkeit z/x | (-) | 0,4 | 1,3 | 1,3 |
| | Dicke | (mm) | 20 | 20 | 20 |
| | Harzaufnahme auf Fläche parallel zu a-Richtung | $(kg/m^2)$ | 0,70 Oberfläche | 0,80 Seitenfläche | 0,80 Oberfläche |
| | Harzaufnahme auf Fläche orthogonal zu a-Richtung | $(kg/m^2)$ | 0,46 Seitenfläche | 0,71 Oberfläche | 0,71 Seitenfläche |

(fortgesetzt)

| | | | | B1 | B2 | B3 |
|---|---|---|---|---|---|---|
| | | Dichte | (kg/m$^3$) | 46 | 47 | 47 |
| | | Druckfestigkeit in Dickenrichtung (d) zu Dichte | (kPa/ (kg/m$^3$)) | 3,6 | 5,7 | 4,4 |
| Formkörper | | Fasereinbringverfahren | (-) | Hakennadel | Hakennadel | Hakennadel |
| | | Fasermaterial | (-) | E-Glas | E-Glas | E-Glas |
| | | Faserstärke | (tex) | 900 | 900 | 900 |
| | | α | (°) | 45 | 45 | 45 |
| | | β | (°) | 90 | 90 | 90 |
| | | Anzahl Faserorientierungen | (-) | 4 | 4 | 4 |
| | | Abstand Fasern (a$_1$ × a$_2$) | (mm × mm) | 16 × 16 | 16 × 16 | 16 × 16 |
| | | Faserbereich (FB2) / Gesamtfaser (F) | (%) | 72 | 72 | 72 |
| | | Anzahl Faserbündel | (1/m$^2$) | 15,625 | 15,625 | 15,625 |
| | | Schlitzeinbringung | (-) | nein | nein | nein |
| | | Aufbringung weiterer Schichten (S2) | (-) | nein | nein | nein |
| Paneel | | Schichtaufbringung | (-) | VI | VI | VI |
| | | Schichtaufbau | (-) | Epoxy / E-Glasfaser | Epoxy / E-Glasfaser | Epoxy / E-Glasfaser |
| | | Schubsteifigkeit | (MPa) | 166 | - | - |
| | | Schubfestigkeit | (MPa) | 2.3 | - | - |
| | | Schälfestigkeit | (kJ/m$^2$) | - | - | - |
| | | Knitterfestigkeit* | (MPa) | 57 | 70 | 59 |
| | | Harzaufnahme durch Schaumstoffoberfläche (ohne Pins) | (kg/m$^2$) | 0,46 | 0,80 | 0,71 |
| | | Harzaufnahme* | (kg/m$^2$) | 1,8 | 2,3 | 2,2 |
| * rechnerisch ermittelte Werte | | | | | | |

Die erfindungsgemäß hergestellten Reaktivschaumstoffe und damit auch die erfindungsgemäßen Formkörper sowie die daraus hergestellten Paneele zeichnen sich durch eine gute Anisotropie aus. Durch die Anisotropie können zudem weitere Eigenschaften gesteuert werden.

In Beispiel B1 und Beispiel B3 ist die a-Richtung der Zellen senkrecht zur Dickenrichtung (d) des Reaktivschaumstoffs bzw. des Formkörpers orientiert. Diese resultiert in einer geringen oberflächlichen Harzaufnahme, verglichen mit der Harzaufnahme der Seitenflächen, die senkrecht zu der Oberfläche liegen. Zudem weist das Paneel eine sehr geringe Dichte auf.

In Beispiel B2 (Referenz) dagegen, sind die a-Richtungen der Zellen senkrecht zur Oberfläche des Reaktivschaumstoffs bzw. des Formkörpers orientiert, bilden also mit der Dickenrichtung (d) einen Winkel γ von 0°. Dies resultiert zwar in einer etwas höheren Harzaufnahme an der Oberfläche, allerdings resultieren daraus auch bessere mechanische Eigenschaften in Dickenrichtung (d). Zudem weisen die hergestellten Paneele eine gute Knitterfestigkeit auf.

**Patentansprüche**

1. Formkörper aus Reaktivschaumstoff, **dadurch gekennzeichnet, dass** mindestens eine Faser (F) sich mit einem Faserbereich (FB2) innerhalb des Formkörpers befindet und von dem Reaktivschaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei der Reaktivschaumstoff nach einem Doppelbandschäumverfahren oder einem Blockschäumverfahren hergestellt ist,

   wobei der Reaktivschaumstoff Zellen umfasst, wobei mindestens 50 % der Zellen anisotrop sind, wobei zumindest eine der mechanischen Eigenschaften des Reaktivschaumstoffs anisotrop ist, wobei der Reaktivschaumstoff auf Basis eines Polyurethans, eines Polyharnstoffs oder eines Polyisocyanurats ist,
   wobei mindestens 50 % der Zellen bezogen auf ihre größte Dimension (a-Richtung) in einem Winkel $\gamma$ von > 60° relativ zur Dickenrichtung (d) des Formkörpers ausgerichtet sind,
   wobei die Faser (F) in einem Winkel $\alpha$ von 10 bis 70° relativ zur Dickenrichtung (d) des Formkörpers in den Reaktivschaumstoff eingebracht ist, und
   wobei zwei oder mehr Fasern (F) in einem Winkel $\beta$ zueinander im Formkörper vorliegen und der Winkel $\beta$ im Bereich $\beta$ = 360°/n liegt, wobei n eine ganzzahlige Zahl ist.

2. Formkörper gemäß Anspruch 1, **dadurch gekennzeichnet, dass** das Doppelbandschäumverfahren die folgenden Schritte I-1) bis IV-1) umfasst:

   I-1) Bereitstellung einer reaktiven Mischung, die zumindest eine erste Komponente (K1) und zumindest eine zweite Komponente (K2) enthält, wobei die erste Komponente (K1) und die zweite Komponente (K2) miteinander reagieren können,
   II-1) Einbringen der in Schritt I-1) bereitgestellten reaktiven Mischung zwischen ein unteres Trägermaterial und ein oberes Trägermaterial, wobei die reaktive Mischung auf dem unteren Trägermaterial aufliegt und wobei das obere Trägermaterial auf der reaktiven Mischung aufliegt,
   III-1) Expansion der reaktiven Mischung zwischen dem unteren Trägermaterial und dem oberen Trägermaterial unter Erhalt eines expandierten Schaumstoffs und
   IV-1) Kalibrieren des in Schritt III-1) erhaltenen expandierten Schaumstoffs zwischen zwei parallelen Bändern unter Erhalt des Reaktivschaumstoffs,

   wobei die Schritte III-1) und IV-1) nacheinander oder gleichzeitig, vorzugsweise gleichzeitig, durchgeführt werden.

3. Formkörper gemäß Anspruch 1, **dadurch gekennzeichnet, dass** das Blockschäumverfahren die folgenden Schritte I-2) bis III-2) umfasst:

   I-2) Bereitstellung einer reaktiven Mischung, die zumindest eine erste Komponente (K1) und zumindest eine zweite Komponente (K2) enthält, wobei die erste Komponente (K1) und die zweite Komponente (K2) miteinander reagieren können,
   II-2) Einbringen der in Schritt I-2) bereitgestellten reaktiven Mischung in ein formgebendes Werkzeug, wobei das formgebende Werkzeug zumindest eine offene Seite und zumindest zwei geschlossene Seiten aufweist, und
   III-2) Expansion der reaktiven Mischung in dem formgebenden Werkzeug unter Erhalt des Reaktivschaumstoffs.

4. Formkörper gemäß einem der Ansprüche 1 bis 3, **dadurch gekennzeichnet, dass** der Reaktivschaumstoff auf Basis eines Polyurethans, eines Polyharnstoffs oder eines Polyisocyanurats ist,

   i) wobei das Polyurethan, der Polyharnstoff oder das Polyisocyanurat jeweils nach einem Doppelbandschäumverfahren gemäß Anspruch 2 hergestellt wird und bei dem die in Schritt I-1) bereitgestellte reaktive Mischung als erste Komponente (K1) mindestens ein Polyisocyanat, und als zweite Komponente (K2) mindestens eine Verbindung mit gegenüber Isocyanaten reaktiven Gruppen, sowie als weitere Komponente mindestens ein Treibmittel enthält, oder
   ii) wobei das Polyurethan, der Polyharnstoff oder das Polyisocyanurat jeweils nach einem Blockschäumverfahren gemäß Anspruch 3 hergestellt wird und bei den in Schritt I-2) bereitgestellte reaktive Mischung als erste Komponente (K1) mindestens ein Polyisocyanat, und als zweite Komponente (K2) mindestens eine Verbindung mit gegenüber Isocyanaten reaktiven Gruppen, sowie als weitere Komponente mindestens ein Treibmittel enthält.

5. Formkörper gemäß einem der Ansprüche 1 bis 4, **dadurch gekennzeichnet, dass** der Reaktivschaumstoff Zellen umfasst, wobei

i) mindestens 80 %, bevorzugt mindestens 90 %, der Zellen anisotrop sind, und/oder

ii) das Verhältnis der größten Dimension (a-Richtung) zur kleinsten Dimension (c-Richtung) von mindestens 50 %, vorzugsweise von mindestens 80 %, mehr bevorzugt von mindestens 90 %, der Zellen $\geq$ 1,05, bevorzugt im Bereich von 1,1 bis 10, insbesondere bevorzugt im Bereich von 1,2 bis 5 liegt, und/oder

iii) die mittlere Größe der kleinsten Dimension (c-Richtung) von mindestens 50 %, vorzugsweise von mindestens 80 %, mehr bevorzugt von mindestens 90 %, der Zellen im Bereich von 0,01 bis 1 mm, vorzugsweise im Bereich von 0,02 bis 0,5 mm und insbesondere im Bereich von 0,02 bis 0,3 mm liegt, und/oder

iv) mindestens 50 %, vorzugsweise mindestens 80 %, mehr bevorzugt mindestens 90 %, der Zellen orthotrop oder transversal isotrop sind, und/oder

v) mindestens 50 %, vorzugsweise mindestens 80 %, mehr bevorzugt mindestens 90 %, der Zellen bezogen auf ihre größte Dimension (a-Richtung) in einem Winkel $\gamma$ von $\geq$ 70°, bevorzugt von $\geq$ 80° relativ zur Dickenrichtung (d) des Formkörpers ausgerichtet sind, und/oder

vi) der Reaktivschaumstoff zu mindestens 80 %, bevorzugt zu mindestens 95 %, besonders bevorzugt zu mindestens 98 % geschlossenzellig ist, und/oder

vii) sich die Faser (F) in einem Winkel $\varepsilon$ von $\leq$ 60°, bevorzugt von $\leq$ 50° relativ zur größten Dimension (a-Richtung) von mindestens 50 %, vorzugsweise von mindestens 80 %, mehr bevorzugt von mindestens 90 % der Zellen des Reaktivschaumstoffs befindet.

6. Formkörper gemäß einem der Ansprüche 1 bis 5 **dadurch gekennzeichnet, dass**

i) der Reaktivschaumstoff eine Dicke (z-Richtung) im Bereich von mindestens 10 mm, vorzugsweise von mindestens 100 mm, eine Länge (x-Richtung) von mindestens 200 mm, vorzugsweise von mindestens 400 mm, und eine Breite (y-Richtung) von mindestens 200 mm, vorzugsweise von mindestens 400 mm, aufweist, und/oder

ii) die Oberfläche von mindestens einer Seite des Formkörpers mindestens eine Vertiefung aufweist, vorzugsweise ist die Vertiefung ein Schlitz oder ein Loch, und/oder

iii) alle mechanischen Eigenschaften des Reaktivschaumstoffs anisotrop, vorzugsweise orthotrop oder transversal isotrop, sind, und/oder

iv) zumindest eines der elastischen Moduli, vorzugsweise alle elastischen Moduli, des Reaktivschaumstoffs sich gemäß einem anisotropen, vorzugsweise orthotropen oder transversal isotropen, Werkstoff verhalten, und/oder

v) das Verhältnis der Druckfestigkeit des Reaktivschaumstoffs in der Dicke (z-Richtung) zu der Druckfestigkeit des Reaktivschaumstoffs in der Länge (x-Richtung) $\geq$ 1,1, vorzugsweise $\geq$ 1,5, insbesondere bevorzugt zwischen 2 und 10, ist, wobei die Druckfestigkeit nach DIN EN ISO 844 gemäß Stand deutsche Version Oktober 2009 bestimmt wird, und/oder

vi) dass das im Reaktivschaumstoff enthaltene Polymer eine Glasübergangstemperatur ($T_G$) aufweist, die bei mindestens 80 °C, bevorzugt bei mindestens 110 °C, insbesondere bevorzugt bei mindestens 130 °C, liegt, bestimmt mittels Differenzthermoanalyse, und/oder

vii) die Faser (F) eine einzelne Faser oder ein Faserbündel, vorzugsweise ein Faserbündel, ist und/oder

viii) die Faser (F) eine organische, anorganische, metallische, keramische Faser oder eine Kombination daraus ist, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser; eine polymere Faser ist vorzugsweise eine Faser aus Polyester, Polyamid, Polyaramid, Polyethylen, Polyurethan, Polyvinylchlorid, Polyimid und/oder Polyamidimid; eine Naturfaser ist vorzugsweise eine Faser aus Sisal, Hanf, Flachs, Bambus, Kokos und/oder Jute, und/oder

ix) die Faser (F) als Faserbündel eingesetzt wird mit einer Anzahl von Einzelfasern pro Bündel von mindestens 10, bevorzugt 100 bis 100 000, besonders bevorzugt 300 bis 10 000 bei Glasfasern und 1 000 bis 50 000 bei Kohlenstofffasern, und insbesondere bevorzugt 500 bis 5 000 bei Glasfasern und 2 000 bis 20 000 bei Kohlenstofffasern, und/oder

x) der Faserbereich (FB1) und der Faserbereich (FB3) jeweils unabhängig voneinander 1 bis 45 %, vorzugsweise 2 bis 40 %, besonders bevorzugt 5 bis 30 %, und der Faserbereich (FB2) 10 bis 98 %, vorzugsweise 20 bis 96 %, besonders bevorzugt 40 bis 90 %, der Gesamtlänge einer Faser (F) ausmachen, und/oder

xi) die Faser (F) in einem Winkel $\alpha$ von 30 bis 60°, bevorzugt von 30 bis 50°, mehr bevorzugt 30 bis 45°, insbesondere von 45°, relativ zur Dickenrichtung (d) des Formkörpers in den Reaktivschaumstoff eingebracht ist, und/oder

xii) im Formkörper die erste Seite des Formkörpers, aus der der Faserbereich (FB1) der Faser (F) herausragt, der zweiten Seite des Formkörpers gegenüberliegt, aus der der Faserbereich (FB3) der Faser (F) herausragt, und/oder

xiii) der Formkörper eine Vielzahl von Fasern (F), vorzugsweise von Faserbündeln, enthält und/oder mehr als 10 Fasern (F) oder Faserbündel pro m$^2$ umfasst, bevorzugt mehr als 1 000 pro m$^2$, besonders bevorzugt 4 000 bis 40 000 pro m$^2$.

7. Paneel umfassend mindestens einen Formkörper gemäß einem der Ansprüche 1 bis 6 und mindestens eine Schicht (S1).

8. Paneel gemäß Anspruch 7, **dadurch gekennzeichnet, dass** die Schicht (S1) mindestens ein Harz umfasst, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen.

9. Paneel gemäß Anspruch 8, **dadurch gekennzeichnet, dass** die Schicht (S1) zusätzlich mindestens ein faserförmiges Material enthält, wobei

i) das faserförmige Material Fasern in Form von ein oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m$^2$ enthält, und/oder

ii) das faserförmige Material organische, anorganische, metallische oder keramische Fasern, bevorzugt polymere Fasern, Basaltfasern, Glasfasern, Kohlenstofffasern oder Naturfasern, besonders bevorzugt Glasfasern oder Kohlenstofffasern enthält.

10. Paneel gemäß einem der Ansprüche 7 bis 9, **dadurch gekennzeichnet, dass** das Paneel zwei Schichten (S1) aufweist und die beiden Schichten (S1) jeweils an einer Seite des Formkörpers angebracht sind, die der jeweils anderen Seite im Formkörper gegenüberliegt.

11. Paneel gemäß einem der Ansprüche 7 bis 10, **dadurch gekennzeichnet, dass**

i) der Faserbereich (FB1) der Faser (F) teilweise oder vollständig, vorzugsweise vollständig, mit der ersten Schicht (S1) in Kontakt ist, und/oder

ii) der Faserbereich (FB3) der Faser (F) teilweise oder vollständig, vorzugsweise vollständig, mit der zweiten Schicht (S1) in Kontakt ist, und/oder

iii) das Paneel zwischen mindestens einer Seite des Formkörpers und mindestens einer Schicht (S1) mindestens eine Schicht (S2) aufweist, vorzugsweise ist die Schicht (S2) aus flächigen Fasermaterialien oder polymeren Folien, besonders bevorzugt aus porösen flächigen Fasermaterialien oder porösen polymeren Folien, insbesondere bevorzugt aus Papier, Glasfasern oder Kohlenstofffasern in Form von Vliesen, Gelegen oder Geweben, und/oder

iv) das Paneel zwischen mindestens einer Seite und mindestens einer Schicht (S1) mindestens eine Schicht (S2) aufweist, wobei die mindestens eine Schicht (S2) als oberes Trägermaterial und/oder als unteres Trägermaterial in Schritt II-1) des Doppelbandschäumverfahrens gemäß Anspruch 2 auf den Reaktivschaumstoff des Formkörpers des Paneels aufgebracht wurde, und/oder

v) der im Paneel enthaltene Formkörper mindestens eine Seite, die nicht mechanisch und/oder thermisch bearbeitet wurde, aufweist.

12. Verfahren zur Herstellung eines Formkörpers gemäß einem der Ansprüche 1 bis 6, **dadurch gekennzeichnet, dass** mindestens eine Faser (F) in den Reaktivschaumstoff teilweise eingebracht wird, wodurch sich die Faser (F) mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt.

13. Verfahren gemäß Anspruch 12, **dadurch gekennzeichnet, dass** das teilweise Einbringen von mindestens einer Faser (F) in den Reaktivschaumstoff durch Einnähen unter Verwendung einer Nadel erfolgt,

vorzugsweise erfolgt das teilweise Einbringen durch die Schritte a) bis f):

a) gegebenenfalls Aufbringen von mindestens einer Schicht (S2) auf mindestens eine Seite des Reaktivschaumstoffs,

b) Erzeugung von einem Loch je Faser (F) im Reaktivschaumstoff, wobei sich das Loch von einer ersten Seite zu einer zweiten Seite des Reaktivschaumstoffs und gegebenenfalls durch die Schicht (S2) erstreckt,

c) Bereitstellung von mindestens einer Faser (F) auf der zweiten Seite des Reaktivschaumstoffs,

d) Durchführen einer Nadel von der ersten Seite des Formkörpers durch das Loch zu der zweiten Seite des Reaktivschaumstoffs und gegebenenfalls Durchführen der Nadel durch die Schicht (S2),

e) Befestigen von mindestens einer Faser (F) an der Nadel auf der zweiten Seite des Reaktivschaumstoffs, und

f) Rückführen der Nadel samt Faser (F) durch das Loch, so dass die Faser (F) sich mit dem Faserbereich (FB2) innerhalb des Formkörpers befindet und von dem Reaktivschaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt,

besonders bevorzugt werden die Schritte b) und d) gleichzeitig durchgeführt.

14. Verfahren zur Herstellung eines Paneels gemäß einem der Ansprüche 7 bis 11, **dadurch gekennzeichnet, dass** die mindestens eine Schicht (S1) als reaktives, viskoses Harz auf einen Formkörper gemäß einem der Ansprüche 1 bis 6 erzeugt, aufgebracht und ausgehärtet wird, vorzugsweise durch Flüssigimprägnierverfahren, besonders bevorzugt durch druck- bzw. vakuumunterstützte Imprägnierverfahren, insbesondere bevorzugt durch Vakuuminfusion oder druckunterstützte Injektionsverfahren, am meisten bevorzugt durch Vakuuminfusion.

15. Verwendung eines Formkörpers gemäß einem der Ansprüche 1 bis 6 oder eines Paneels gemäß einem der Ansprüche 7 bis 11 für Rotorblätter in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

## Claims

1. A molding made of reactive foam, wherein at least one fiber (F) is with a fiber region (FB2) arranged inside the molding and surrounded by the reactive foam while a fiber region (FB1) of the fiber (F) projects from a first side of the molding and a fiber region (FB3) of the fiber (F) projects from a second side of the molding, wherein the reactive foam has been produced by a double-belt foaming process or a block foaming process,

   wherein the reactive foam comprises cells, wherein at least 50% of the cells are anisotropic, wherein at least one of the mechanical properties of the reactive foam is anisotropic, wherein the reactive foam is based on a polyurethane, a polyurea or a polyisocyanurate,

   wherein at least 50% of the cells based on their largest dimension (a-direction) are oriented at an angle $\gamma$ of >60° relative to the thickness direction (d) of the molding,

   wherein the fiber (F) has been introduced into the reactive foam at an angle $\alpha$ of 10° to 70° relative to the thickness direction (d) of the molding and

   wherein two or more fibers (F) are present in the molding at an angle $\beta$ to one another

   and the angle $\beta$ is in the range $\beta = 360°/n$, wherein n is an integer.

2. The molding according to claim 1, wherein the mold foaming process comprises the following steps I-1) to IV-1):

   I-1) providing a reactive mixture which comprises at least one first component (K1) and at least one second component (K2), wherein the first component (K1) and the second component (K2) can react with one another,

   II-1) injecting the reactive mixture provided in step I-1) between the lower carrier material and an upper carrier material, wherein the reactive mixture rests on the lower carrier material and wherein the upper carrier material rests on the reactive mixture,

   III-1) expanding the reactive mixture between the lower carrier material and the upper carrier material to obtain an expanded foam and

   IV-1) calibrating the expanded foam obtained in step III-1) between two parallel belts to obtain the reactive foam, wherein steps III-1) and IV-1) are performed consecutively or simultaneously, preferably simultaneously.

3. The molding according to claim 1, wherein the block foaming process comprises the following steps 1-2) to III-2):

I-2)providing a reactive mixture which comprises at least one first component (K1) and at least one second component (K2), wherein the first component (K1) and the second component (K2) can react with one another,

II-2) introducing the reactive mixture provided in step I-2) into a shaping mold, wherein the shaping mold has at least one open side and at least two closed sides and

III-2)expanding the reactive mixture in the shaping mold to obtain the reactive foam.

4.  The molding according to any of claims 1 to 3, wherein the reactive foam is based on a polyurethane, a polyurea or a polyisocyanurate,

   i) wherein the polyurethane, the polyurea or the polyisocyanurate is in each case produced by a double belt foaming process according to claim 2 and where the reactive mixture provided in step I-1) comprises as the first component (K1) at least one polyisocyanate and as the second component (K2) at least one compound having isocyanate-reactive groups and as a further component at least one blowing agent or
   ii) wherein the polyurethane, the polyurea or the polyisocyanurate is in each case produced by a block foaming process according to claim 3 and where the reactive mixture provided in step I-2) comprises as the first component (K1) at least one polyisocyanate and as the second component (K2) at least one compound having isocyanate-reactive groups and as a further component at least one blowing agent.

5.  The molding according to any of claims 1 to 4, wherein the reactive foam comprises cells, wherein

   i) at least 80%, preferably at least 90%, of the cells are anisotropic, and/or
   ii) the ratio of the largest dimension (a-direction) to the smallest dimension (c-direction) of at least 50%, preferably of at least 80% and more preferably of at least 90% of the cells is $\geq 1.05$, preferably in the range from 1.1 to 10, especially preferably in the range from 1.2 to 5, and/or
   iii)the mean size of the smallest dimension (c-direction) of at least 50%, preferably of at least 80% and more preferably of at least 90% of the cells is in the range from 0.01 to 1 mm, preferably in the range from 0.02 to 0.5 mm and especially in the range from 0.02 to 0.3 mm, and/or
   iv) at least 50%, preferably at least 80% and more preferably at least 90% of the cells are orthotropic or transversely isotropic, and/or
   v) at least 50%, preferably at least 80% and more preferably at least 90% of the cells based on their largest dimension (a-direction) are aligned at an angle $\gamma$ of $\geq 70°$, preferably of $\geq 80°$, relative to the thickness direction (d) of the molding, and/or
   vi) the reactive foam has a closed-cell content of at least 80%, preferably at least 95%, particularly preferably at least 98%, and/or
   vii) the fiber (F) is arranged at an angle $\varepsilon$ of $\leq 60°$, preferably of $\leq 50°$, relative to the largest dimension (a-direction) of at least 50%, preferably of at least 80% and more preferably of at least 90% of the cells of the reactive foam.

6.  The molding according to any of claims 1 to 5, wherein

   i) the reactive foam has a thickness (z-direction) in the range of at least 10 mm, preferably of at least 100 mm, a length (x-direction) of at least 200 mm, preferably of at least 400 mm, and a width (y-direction) of at least 200 mm, preferably of at least 400 mm, and/or
   ii) the surface of at least one side of the molding has at least one depression, the depression preferably being a slot or a hole, and/or
   iii)all of the mechanical properties of the reactive foam are anisotropic, preferably orthotropic or transversely isotropic, and/or
   iv) at least one of the elastic moduli, preferably all of the elastic moduli, of the reactive foam behave(s) in the manner of an anisotropic, preferably orthotropic or transversely isotropic, material, and/or
   v) the ratio of the compressive strength of the reactive foam in thickness (z-direction) to the compressive strength of the reactive foam in length (x-direction) is $\geq 1.1$, preferably $\geq 1.5$, especially preferably between 2 and 10, wherein compressive strength is determined as per DIN EN ISO 844, German version, October 2009, and/or
   vi) the polymer present in the reactive foam has a glass transition temperature ($T_G$) of at least 80°C, preferably of at least 110°C, especially preferably of at least 130°C, determined by differential scanning calorimetry, and/or
   vii) the fiber (F) is a single fiber or a fiber bundle, preferably a fiber bundle, and/or
   viii) the fiber (F) is an organic, inorganic, metallic or ceramic fiber or a combination thereof, preferably a polymeric fiber, basalt fiber, glass fiber, carbon fiber or natural fiber, especially preferably a polyaramid fiber, glass fiber, basalt fiber or carbon fiber; a polymeric fiber is preferably a fiber of polyester, polyamide, polyaramid, polyethylene, polyurethane, polyvinyl chloride, polyimide and/or polyamide imide; a natural fiber is preferably a fiber of sisal, hemp, flax, bamboo, coconut and/or jute, and/or

ix) the fiber (F) is employed in the form of a fiber bundle having a number of individual fibers per bundle of at least 10, preferably 100 to 100 000, particularly preferably 300 to 10 000, in the case of glass fibers and 1000 to 50 000 in the case of carbon fibers and especially preferably 500 to 5000 in the case of glass fibers and 2000 to 20 000 in the case of carbon fibers, and/or

x) the fiber region (FB1) and the fiber region (FB3) each independently of one another account for 1% to 45%, preferably 2% to 40% and particularly preferably 5% to 30% and the fiber region (FB2) accounts for 10% to 98%, preferably 20% to 96%, particularly preferably 40% to 90%, of the total length of a fiber (F), and/or

xi) the fiber (F) has been introduced into the reactive foam at an angle $\alpha$ of 30° to 60°, preferably of 30° to 50°, more preferably of 30° to 45°, in particular of 45°, relative to the thickness direction (d) of the molding, and/or

xii) in the molding the first side of the molding from which the fiber region (FB1) of the fiber (F) projects is opposite the second side of the molding from which the fiber region (FB3) of the fiber (F) projects, and/or

xiii) the molding comprises a multiplicity of fibers (F), preferably of fiber bundles, and/or comprises more than 10 fibers (F) or fiber bundles per m$^2$, preferably more than 1000 per m$^2$, particularly preferably 4000 to 40 000 per m$^2$.

7. A panel comprising at least one molding according to any of claims 1 to 6 and at least one layer (S1).

8. The panel according to claim 7, wherein the layer (S1) comprises at least one resin, the resin preferably being a reactive thermoset or thermoplastic resin, the resin more preferably being based on epoxides, acrylates, polyurethanes, polyamides, polyesters, unsaturated polyesters, vinyl esters or mixtures thereof, and the resin especially being an amine-curing epoxy resin, a latently curing epoxy resin, an anhydride-curing epoxy resin or a polyurethane formed from isocyanates and polyols.

9. The panel according to claim 8, wherein the layer (S1) additionally comprises at least one fibrous material, wherein

i) the fibrous material comprises fibers in the form of one or more laminas of chopped fibers, nonwovens, non-crimp fabrics, knits and/or wovens, preferably in the form of non-crimp fabrics or wovens, particularly preferably in the form of non-crimp fabrics or wovens having a basis weight per non-crimp fabric or woven of 150 to 2500 g/m$^2$, and/or

ii) the fibrous material comprises organic, inorganic, metallic or ceramic fibers, preferably polymeric fibers, basalt fibers, glass fibers, carbon fibers or natural fibers, particularly preferably glass fibers or carbon fibers.

10. The panel according to any of claims 7 to 9, wherein the panel has two layers (S1) and the two layers (S1) are each mounted on a side of the molding opposite the respective other side in the molding.

11. The panel according to any of claims 7 to 10, wherein

i) the fiber region (FB1) of the fiber (F) is in partial or complete contact, preferably complete contact, with the first layer (S1), and/or

ii) the fiber region (FB3) of the fiber (F) is in partial or complete contact, preferably complete contact, with the second layer (S1), and/or

iii) the panel comprises between at least one side of the molding and at least one layer (S1) at least one layer (S2), the layer (S2) preferably being composed of sheetlike fiber materials or polymeric films, particularly preferably of porous sheetlike fiber materials or porous polymeric films, especially preferably of paper, glass fibers or carbon fibers in the form of nonwovens, non-crimp fabrics or wovens, and/or

iv) the panel comprises between at least one side and at least one layer (S1) at least one layer (S2), wherein the at least one layer (S2) was applied to the reactive foam of the molding of the panel as the upper carrier material and/or as the lower carrier material in step II-1) of the double belt foaming process according to claim 2, and/or

v) the molding present in the panel comprises at least one side that has not been subjected to mechanical and/or thermal processing.

12. A process for producing a molding according to any of claims 1 to 6, wherein at least one fiber (F) is partially introduced into the reactive foam with the result that the fiber (F) is with the fiber region (FB2) arranged inside the molding and surrounded by the reactive foam while the fiber region (FB1) of the fiber (F) projects from a first side of the molding and the fiber region (FB3) of the fiber (F) projects from a second side of the molding.

13. The process according to claim 12, wherein the partial introduction of at least one fiber (F) into the reactive foam is effected by sewing-in using a needle,

partial introduction preferably being effected by steps a) to f):

a) optionally applying at least one layer (S2) to at least one side of the reactive foam,
b) producing one hole per fiber (F) in the reactive foam, wherein the hole extends from a first side to a second side of the reactive foam and optionally through the layer (S2),
c) providing at least one fiber (F) on the second side of the reactive foam,
d) passing a needle from the first side of the molding through the hole to the second side of the reactive foam and optionally passing the needle through the layer (S2),
e) securing at least one fiber (F) to the needle on the second side of the reactive foam and
f) returning the needle including the fiber (F) through the hole, so that the fiber (F) is with the fiber region (FB2) arranged inside the molding and surrounded by the reactive foam while the fiber region (FB1) of the fiber (F) projects from a first side of the molding and the fiber region (FB3) of the fiber (F) projects from a second side of the molding,

simultaneous performance of steps b) and d) being particularly preferred.

14. A process for producing a panel according to any of claims 7 to 11, wherein the at least one layer (S1) is produced, applied and cured on a molding according to any of claims 1 to 6 in the form of a reactive viscous resin, preferably by liquid impregnation methods, particularly preferably by pressure- or vacuum-assisted impregnation methods, especially preferably by vacuum infusion or pressure-assisted injection methods, most preferably by vacuum infusion.

15. The use of a molding according to any of claims 1 to 6 or of a panel according to any of claims 7 to 11 for rotor blades in wind turbines, in the transport sector, in the construction sector, in automobile construction, in shipbuilding, in rail vehicle construction, for container construction, for sanitary installations and/or in aerospace.

## Revendications

1. Corps moulé composé de mousse réactive, **caractérisé en ce qu'**au moins une fibre (F) se trouve avec un domaine de fibre (FB2) à l'intérieur du corps moulé et est entourée par la mousse réactive, tandis qu'un domaine de fibre (FB1) de la fibre (F) fait saillie d'un premier côté du corps moulé et qu'un domaine de fibre (FB3) de la fibre (F) fait saillie d'un deuxième côté du corps moulé, la mousse réactive étant préparée par un procédé de moussage à double bande ou un procédé de moussage en bloc,

la mousse réactive comprenant des alvéoles, au moins 50 % des alvéoles étant anisotropes, au moins l'une des propriétés mécaniques de la mousse réactive étant anisotrope, la mousse réactive étant à base d'un polyuréthane, d'une polyurée ou d'un polyisocyanurate, au moins 50 % des alvéoles étant orientées, en ce qui concerne leur plus grande dimension (direction a), d'un angle $\gamma$ de > 60° par rapport à la direction d'épaisseur (d) du corps moulé,
la fibre (F) étant introduite dans la mousse réactive avec un angle $\alpha$ de 10 à 70° par rapport à la direction d'épaisseur (d) du corps moulé, et
deux fibres (F) ou plus étant présentes dans le corps moulé avec un angle $\beta$ les unes par rapport aux autres et l'angle $\beta$ se situant dans la plage $\beta = 360°/n$, n étant un nombre entier.

2. Corps moulé selon la revendication 1, **caractérisé en ce que** le procédé de moussage à double bande comprend les étapes suivantes I-1) à IV-1) :

I-1) mise à disposition d'un mélange réactif qui contient au moins un premier composant (K1) et au moins un deuxième composant (K2), le premier composant (K1) et le deuxième composant (K2) pouvant réagir l'un avec l'autre,
II-1) introduction du mélange réactif mis à disposition dans l'étape I-1) entre un matériau de support inférieur et un matériau de support supérieur, le mélange réactif reposant sur le matériau de support inférieur et le matériau de support supérieur reposant sur le mélange réactif,
III-1) expansion du mélange réactif entre le matériau de support inférieur et le matériau de support supérieur avec obtention d'une mousse expansée et

IV-1) calibration de la mousse expansée obtenue dans l'étape III-1) entre deux bandes parallèles avec obtention de la mousse réactive,

les étapes III-1) et IV-1) étant mises en œuvre l'une après l'autre ou simultanément, de préférence simultanément.

**3.** Corps moulé selon la revendication 1, **caractérisé en ce que** le procédé de moussage en bloc comprend les étapes suivantes I-2) à III-2) :

I-2) mise à disposition d'un mélange réactif qui contient au moins un premier composant (K1) et au moins un deuxième composant (K2), le premier composant (K1) et le deuxième composant (K2) pouvant réagir l'un avec l'autre,
II-2) introduction du mélange réactif mis à disposition dans l'étape I-2) dans un outil de moulage, l'outil de moulage présentant au moins une face ouverte et au moins deux faces fermées, et
III-2) expansion du mélange réactif dans l'outil de moulage avec obtention de la mousse réactive.

**4.** Corps moulé selon l'une quelconque des revendications 1 à 3, **caractérisé en ce que** la mousse réactive est à base d'un polyuréthane, d'une polyurée ou d'un polyisocyanurate,

i) le polyuréthane, la polyurée ou le polyisocyanurate étant à chaque fois préparé(e) selon un procédé de moussage à double bande selon la revendication 2 et dans lequel le mélange réactif préparé dans l'étape I-1) contient en tant que premier composant (K1) au moins un polyisocyanate, et en tant que deuxième composant (K2) au moins un composé comportant des groupes réactifs vis-à-vis des isocyanates, ainsi qu'en tant qu'autre composant au moins un agent gonflant, ou
ii) le polyuréthane, la polyurée ou le polyisocyanurate étant à chaque fois préparé selon un procédé de moussage en bloc selon la revendication 3, et dans lequel le mélange réactif préparé dans l'étape I-2), contient en tant que premier composant (K1) au moins un polyisocyanate, et en tant que deuxième composant (K2) au moins un composé comportant des groupes réactifs par rapport aux isocyanates, ainsi que, comme autre composant, au moins un agent gonflant.

**5.** Corps moulé selon l'une quelconque des revendications 1 à 4, **caractérisé en ce que** la mousse réactive comprend des alvéoles,

i) au moins 80 %, préférablement au moins 90 % des alvéoles étant anisotropes, et/ou
ii) le rapport de la plus grande dimension (direction a) sur la plus petite dimension (direction c) d'au moins 50 %, de préférence d'au moins 80 %, plus préférablement d'au moins 90 %, des alvéoles étant ≥ 1,05, préférablement se situant dans la plage de 1,1 à 10, en particulier préférablement dans la plage de 1,2 à 5, et/ou
iii) la grandeur moyenne de la plus petite dimension (direction c) d'au moins 50 %, de préférence d'au moins 80 %, plus préférablement d'au moins 90 %, des alvéoles se situant dans la plage de 0,01 à 1 mm, de préférence dans la plage de 0,02 à 0,5 mm et en particulier dans la plage de 0,02 à 0,3 mm, et/ou
iv) au moins 50 %, de préférence au moins 80 %, plus préférablement au moins 90 %, des alvéoles étant orthotropes ou transversalement isotropes, et/ou
v) au moins 50 %, de préférence au moins 80 %, plus préférablement au moins 90 %, des alvéoles étant orientées, en ce qui concerne leur plus grande dimension (direction a) d'un angle γ de ≥ 70°, préférablement de ≥ 80° par rapport à la direction d'épaisseur (d) du corps moulé, et/ou
vi) la mousse réactive étant d'au moins 80 %, préférablement d'au moins 95 %, particulièrement préférablement d'au moins 98 % à alvéoles fermées, et/ou
vii) la fibre (F) se trouvant avec un angle ε de ≤ 60°, préférablement de ≤ 50° par rapport à la plus grande dimension (direction a) d'au moins 50 %, de préférence d'au moins 80 %, plus préférablement d'au moins 90 % des alvéoles de la mousse réactive.

**6.** Corps moulé selon l'une quelconque des revendications 1 à 5, **caractérisé en ce que**

i) la mousse réactive présente une épaisseur (direction z) dans la plage d'au moins 10 mm, de préférence d'au moins 100 mm, une longueur (direction x) d'au moins 200 mm, de préférence d'au moins 400 mm et une largeur (direction y) d'au moins 200 mm, de préférence d'au moins 400 mm et/ou
ii) la surface d'au moins un côté du corps moulé présente au moins un évidement, de préférence l'évidement étant une fente ou un trou, et/ou
iii) toutes les propriétés mécaniques de la mousse réactive sont anisotropes, de préférence orthotropes ou transversalement isotropes, et/ou

iv) au moins l'un des modules élastiques, de préférence tous les modules élastiques, de la mousse réactive se comporte(nt) conformément à un matériau anisotrope, de préférence orthotrope ou transversalement isotrope, et/ou

v) le rapport de la résistance à la compression de la mousse réactive dans l'épaisseur (direction z) sur la résistance à la compression de la mousse réactive dans la longueur (direction x) est $\geq 1,1$, de préférence $\geq 1,5$, en particulier préférablement entre 2 et 10, la résistance à la compression étant déterminée selon la norme DIN EN ISO 844 selon l'état de la version allemande d'octobre 2009, et/ou

vi) le polymère contenu dans la mousse réactive présente une température de transition vitreuse ($T_G$) qui se situe à au moins 80 °C, préférablement à au moins 110 °C, en particulier préférablement à au moins 130 °C, déterminée au moyen d'une analyse thermique différentielle, et/ou

vii) la fibre (F) est une fibre individuelle ou un paquet de fibres, de préférence un paquet de fibres, et/ou

viii) la fibre (F) est une fibre organique, inorganique, métallique, céramique ou une combinaison de celles-ci, de préférence une fibre polymérique, une fibre de basalte, une fibre de verre, une fibre de carbone ou une fibre naturelle, en particulier préférablement une fibre de polyaramide, une fibre de verre, une fibre de basalte ou une fibre de carbone ; une fibre polymérique est de préférence une fibre de polyester, de polyamide, de polyaramide, de polyéthylène, de polyuréthane, de poly(chlorure de vinyle), de polyimide et/ou de polyamidimide ; une fibre naturelle est de préférence une fibre de sisal, de chanvre, de lin, de bambou, de coco et/ou de jute, et/ou

ix) la fibre (F) est utilisée en tant que paquet de fibres, avec un nombre de fibres individuelles par paquet d'au moins 10, préférablement de 100 à 100 000, particulièrement préférablement de 300 à 10 000 pour des fibres de verre et de 1 000 à 50 000 pour des fibres de carbone, et en particulier préférablement de 500 à 5 000 pour des fibres de verre et de 2 000 à 20 000 pour des fibres de carbone, et/ou

x) le domaine de fibre (FB1) et le domaine de fibre (FB3) représentent à chaque fois indépendamment l'un de l'autre 1 à 45 %, de préférence 2 à 40 %, particulièrement préférablement 5 à 30 %, et le domaine de fibre (FB2) représente 10 à 98 %, de préférence 20 à 96 %, particulièrement préférablement 40 à 90 %, de la longueur totale d'une fibre (F), et/ou

xi) la fibre (F) est introduite dans la mousse réactive avec un angle $\alpha$ de 30 à 60°, préférablement de 30 à 50°, plus préférablement de 30 à 45°, en particulier de 45°, par rapport à la direction d'épaisseur (d) du corps moulé, et/ou

xii) dans le corps moulé, le premier côté du corps moulé, duquel le domaine de fibre (FB1) de la fibre (F) fait saillie, fait face au deuxième côté du corps moulé, duquel le domaine de fibre (FB3) de la fibre (F) fait saillie, et/ou

xiii) le corps moulé contient une pluralité de fibres (F), de préférence de paquets de fibres et/ou comprenant plus de 10 fibres (F) ou paquets de fibres par m$^2$, préférablement plus de 1 000 par m$^2$, particulièrement préférablement de 4 000 à 40 000 par m$^2$.

7. Panneau comprenant au moins un corps moulé selon l'une quelconque des revendications 1 à 6 et au moins une couche (S1).

8. Panneau selon la revendication 7, **caractérisé en ce que** la couche (S1) comprend au moins une résine, de préférence la résine est une résine réactive duroplastique ou thermoplastique, plus préférablement la résine est à base d'époxydes, d'acrylates, de polyuréthanes, de polyamides, de polyesters, de polyesters insaturés, d'esters de vinyle ou de mélanges correspondants, en particulier la résine est une résine époxy durcissant de manière aminique, une résine époxy durcissant de manière latente, une résine époxy durcissant de manière anhydre ou un polyuréthane composé d'isocyanates et de polyols.

9. Panneau selon la revendication 8, **caractérisé en ce que** la couche (S1) contient de plus au moins un matériau fibreux,

i) le matériau fibreux contenant des fibres sous la forme d'une ou plusieurs couches de fibres coupées, de nontissés, de nappes, de tricots et/ou de tissus, préférablement sous forme de nappes ou de tissus, particulièrement préférablement sous forme de nappes ou de tissus doté(e)s d'un poids surfacique par nappe ou tissu de 150 à 2 500 g/m$^2$, et/ou

ii) le matériau fibreux contenant des fibres organiques, inorganiques, métalliques ou céramiques, préférablement des fibres polymériques, des fibres de basalte, des fibres de verre, des fibres de carbone ou des fibres naturelles, particulièrement préférablement des fibres de verre ou des fibres de carbone.

10. Panneau selon l'une quelconque des revendications 7 à 9, **caractérisé en ce que** le panneau présente deux couches (S1) et les deux couches (S1) étant montées à chaque fois sur un côté du corps moulé qui fait face à l'autre côté respectif dans le corps moulé.

**11.** Panneau selon l'une quelconque des revendications 7 à 10, **caractérisé en ce que**

i) le domaine de fibre (FB1) de la fibre (F) est en contact partiel ou total, de préférence total, avec la première couche (S1), et/ou

ii) le domaine de fibre (FB3) de la fibre (F) est en contact partiel ou total, de préférence total, avec la deuxième couche (S1), et/ou

iii) le panneau présente au moins une couche (S2) entre au moins un côté du corps moulé et au moins une couche (S1), de préférence, la couche (S2) est composée de matériau fibreux à plat ou de feuilles polymériques, particulièrement préférablement est composée de matériau fibreux à plat poreux ou de feuilles polymériques poreuses, en particulier préférablement est composée de papier, de fibres de verre ou de fibres de carbone sous forme de nontissés, de nappes ou de tissus, et/ou

iv) le panneau présente au moins une couche (S2) entre au moins un côté et au moins une couche (S1), l'au moins une couche (S2) ayant été appliquée, en tant que matériau de support supérieur et/ou en tant que matériau de support inférieur dans l'étape II-1) du procédé de moussage à double bande selon la revendication 2, sur la mousse réactive du corps moulé du panneau, et/ou

v) le corps moulé contenu dans le panneau présente au moins un côté qui n'a pas été traité mécaniquement et/ou thermiquement.

**12.** Procédé de préparation d'un corps moulé selon l'une quelconque des revendications 1 à 6, **caractérisé en ce qu'**au moins une fibre (F) est introduite partiellement dans la mousse réactive, ce qui fait que la fibre (F) se trouve avec le domaine de fibre (FB2) à l'intérieur du corps moulé et est entourée par la mousse réactive, tandis que le domaine de fibre (FB1) de la fibre (F) fait saillie d'un premier côté du corps moulé et le domaine de fibre (FB3) de la fibre (F) fait saillie d'un deuxième côté du corps moulé.

**13.** Procédé selon la revendication 12, **caractérisé en ce que** l'introduction partielle d'au moins une fibre (F) dans la mousse réactive est réalisée par couture en utilisant une aiguille,

de préférence, l'introduction partielle est réalisée par les étapes a) à f) :

a) éventuellement application d'au moins une couche (S2) sur au moins un côté de la mousse réactive,

b) génération d'un trou par fibre (F) dans la mousse réactive, le trou s'étendant d'un premier côté vers un deuxième côté de la mousse réactive et éventuellement à travers la couche (S2),

c) mise à disposition d'au moins une fibre (F) sur le deuxième côté de la mousse réactive,

d) passage d'une aiguille du premier côté du corps moulé à travers le trou vers le deuxième côté de la mousse réactive et éventuellement passage de l'aiguille à travers la couche (S2),

e) fixation d'au moins une fibre (F) à l'aiguille sur le deuxième côté de la mousse réactive, et

f) recirculation de l'aiguille avec la fibre (F) à travers le trou, de manière à ce que la fibre (F) se trouve avec le domaine de fibre (FB2) à l'intérieur du corps moulé et soit entourée par la mousse réactive, tandis que le domaine de fibre (FB1) de la fibre (F) fait saillie d'un premier côté du corps moulé et le domaine de fibre (FB3) de la fibre (F) fait saillie d'un deuxième côté du corps moulé,

particulièrement préférablement, les étapes b) et d) sont mises en œuvre en même temps.

**14.** Procédé de préparation d'un panneau selon l'une quelconque des revendications 7 à 11, **caractérisé en ce que** l'au moins une couche (S1) est générée, appliquée et durcie en tant que résine réactive, visqueuse sur un corps moulé selon l'une quelconque des revendications 1 à 6, de préférence par un procédé d'imprégnation de liquide, particulièrement préférablement par un procédé d'imprégnation soutenu sous pression ou sous vide, en particulier préférablement par une infusion sous vide ou par un procédé d'injection soutenu sous pression, le plus préférablement par une infusion sous vide.

**15.** Utilisation d'un corps moulé selon l'une quelconque des revendications 1 à 6 ou d'un panneau selon l'une quelconque des revendications 7 à 11 pour des pales de rotor dans des éoliennes, dans le secteur des transports, dans le secteur de la construction, dans la construction automobile, dans la construction navale, dans la construction de véhicules de chemin de fer, pour la construction de containers, pour des installations sanitaires et/ou dans l'aviation et l'aérospatiale.

**Fig. 1**

**Fig. 2**

O

41

42

α2

α1

2

1

41p

42 p

β

**Fig. 3**

3

2

1

4a

a

d

ε

4

γ

8

4b

**Fig. 4**

3

**IN DER BESCHREIBUNG AUFGEFÜHRTE DOKUMENTE**

**In der Beschreibung aufgeführte Patentdokumente**

- WO 2006125561 A
- WO 2011012587 A
- WO 2012138445 A
- GB 2455044 A
- WO 2009047483 A
- US 7201625 B
- US 6767623 B
- EP 2420531 A
- EP 2480531 A
- WO 2005056653 A
- US 3030256 A
- US 6187411 B
- US 20100196652 A
- WO 12134878 A2

**In der Beschreibung aufgeführte Nicht-Patentliteratur**

- Kunststoffhandbuch. Karl Hanser Verlag, 1993, vol. 7, 3
- **PENCZEK et al.** *Advances in Polymer Science,* 2005, vol. 184, 1-95
- **PHAM et al.** *Ullmann's Encyclopedia of Industrial Chemistry,* 2012, vol. 13
- **FAHNLER.** *Polyamide, Kunststoff Handbuch 3/4,* 1998
- Wiley Encyclopedia of Composites. Wiley, 2012
- **PARNAS et al.** *Liquid Composite Moulding, Hanser,* 2000
- **WILLIAMS et al.** *Composites Part A,* 1997, vol. 27, 517-524